(19) Europäisches Patentamt
European Patent Office
Office européen des brevets

(11) **EP 4 528 250 A1**

(12) **EUROPEAN PATENT APPLICATION**
published in accordance with Art. 153(4) EPC

(43) Date of publication:
26.03.2025 Bulletin 2025/13

(21) Application number: 23807456.1

(22) Date of filing: 02.05.2023

(51) International Patent Classification (IPC):
*G01N 15/14* (2024.01)     *G01N 21/64* (2006.01)

(52) Cooperative Patent Classification (CPC):
G01N 15/14; G01N 21/64

(86) International application number:
PCT/JP2023/017188

(87) International publication number:
WO 2023/223851 (23.11.2023 Gazette 2023/47)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 16.05.2022 JP 2022080447

(71) Applicant: **Sony Group Corporation**
**Tokyo 108-0075 (JP)**

(72) Inventors:
• **TAKAHASHI, Yasuaki**
**Tokyo 108-0075 (JP)**
• **FURUKAWA, Akio**
**Tokyo 108-0075 (JP)**

(74) Representative: **D Young & Co LLP**
**3 Noble Street**
**London EC2V 7BQ (GB)**

(54) **BIOLOGICAL SAMPLE ANALYSIS SYSTEM, INFORMATION PROCESSING DEVICE, INFORMATION PROCESSING METHOD, AND BIOLOGICAL SAMPLE ANALYSIS METHOD**

(57) A biological sample analysis system according to an embodiment includes: an irradiation unit that irradiates a bioparticle in a biological sample with light; a detection unit that detects, as an event, a luminance change of light emitted from the bioparticle by the irradiation with the light, includes a plurality of event pixels arranged in a two-dimensional lattice pattern, and outputs event data including address information of each of the event pixels and information of a time when the event is detected in each of the event pixels; a generation unit that corrects the information of the time of some of a plurality of pieces of the event data by using each of a plurality of correction amounts, and generates image data regarding the bioparticle for each correction amount by using the plurality of pieces of event data including the event data in which the information of the time is corrected; an evaluation unit that evaluates each of a plurality of pieces of the image data; and a processing unit that generates bioparticle information regarding the bioparticle based on image data with a highest evaluation by the evaluation unit among the plurality of pieces of image data.

FIG.10

EP 4 528 250 A1

**Description**

Field

The present disclosure relates to a biological sample analysis system, an information processing device, an information processing method, and a biological sample analysis method.

Background

Hitherto, there has been flow cytometry as a method for analyzing (or investigating (analysis includes investigation in the present disclosure)) proteins of biologically relevant microparticles such as cells, microorganisms, and liposomes. A device used for the flow cytometry is referred to as a flow cytometer (FCM). In the flow cytometer, microparticles flowing in a flow channel in a line are irradiated with laser light having a specific wavelength, light such as fluorescence, forward scattered light, and side scattered light emitted from each microparticle is converted into an electric signal by a photodetector and quantified, and the result is statistically investigated, thereby determining the type, size, structure, and the like of each microparticle.

Furthermore, in recent years, a so-called imaging flow cytometer (IFCM) that acquires a two-dimensional image of fluorescence emitted from a microparticle by an image sensor has been developed.

Citation List

Patent Literature

Patent Literature 1: US 6,211,955

Summary

Technical Problem

However, since fluorescence emitted from a microparticle is very weak, the imaging flow cytometer according to the related art cannot acquire a clear image with a sufficient brightness, and thus, it is difficult to improve accuracy in analysis of the microparticle.

Furthermore, in recent years, a so-called time delay integration (TDI)-charge coupled device (CCD) imaging flow cytometer that transfers and integrates an exposure value of a CCD to an adjacent line in synchronization with a speed of a cell has been developed (see, for example, Patent Literature 1). However, in this method, the speed of the cell flowing in a flow channel cannot be accurately specified, and there is a possibility that image quality is deteriorated.

Therefore, the present disclosure proposes a biological sample analysis system, an information processing device, an information processing method, and a biological sample analysis method capable of suppressing deterioration in image quality.

Solution to Problem

In order to solve the above problem, a biological sample analysis system according to one embodiment of the present disclosure includes: an irradiation unit that irradiates a bioparticle in a biological sample with light; a detection unit that detects, as an event, a luminance change of light emitted from the bioparticle by the irradiation with the light, includes a plurality of event pixels arranged in a two-dimensional lattice pattern, and outputs event data including address information of each of the event pixels and information of a time when the event is detected in each of the event pixels; a generation unit that corrects the information of the time of some of a plurality of pieces of the event data by using each of a plurality of correction amounts, and generates image data regarding the bioparticle for each correction amount by using the plurality of pieces of event data including the event data in which the information of the time is corrected; an evaluation unit that evaluates each of a plurality of pieces of the image data; and a processing unit that generates bioparticle information regarding the bioparticle based on image data with a highest evaluation by the evaluation unit among the plurality of pieces of image data.

Brief Description of Drawings

FIG. 1 is a schematic diagram illustrating a configuration example of a biological sample analysis device according to the present disclosure.

FIG. 2 is a block diagram illustrating a more specific configuration example of a biological sample analysis device according to a first embodiment of the present disclosure.

FIG. 3 is a block diagram illustrating a schematic configuration example of an event-based vision sensor (EVS) device according to the first embodiment.

FIG. 4 is a diagram for describing an event detected for each position in an image of a bioparticle in the first embodiment.

FIG. 5 is a diagram for describing an operation example of a time delay integration (TDI)-EVS method according to the first embodiment (part 1).

FIG. 6 is a diagram for describing the operation example of the TDI-EVS method according to the first embodiment (part 2).

FIG. 7 is a diagram for describing the operation example of the TDI-EVS method according to the first embodiment (part 3).

FIG. 8 is a diagram for describing the operation example of the TDI-EVS method according to the first embodiment (part 4).

FIG. 9 is a diagram illustrating an example of a relationship between an event detection threshold and noise.

FIG. 10 is a block diagram illustrating a more detailed configuration example of an event data processing unit according to the first embodiment.

FIG. 11 is a diagram illustrating an example of an evaluation value calculated by an evaluation function according to the first embodiment.

FIG. 12 is a flowchart illustrating an operation flow example of the event data processing unit according to the first embodiment.

FIG. 13 is a diagram for describing a specific example of evaluation value calculation according to the first embodiment.

FIG. 14 is a flowchart illustrating an operation example according to the first embodiment.

FIG. 15 is a flowchart illustrating a more detailed operation example of an event stream acquisition operation illustrated in Step S105 of FIG. 14.

FIG. 16 is a block diagram illustrating a schematic configuration example of a part of a detection unit according to a second embodiment of the present disclosure.

FIG. 17 is a hardware configuration diagram illustrating an example of a computer that implements functions of an information processing device according to the present disclosure.

Description of Embodiments

Hereinafter, embodiments of the present disclosure will be described in detail with reference to the drawings. Note that, in the following embodiments, the same reference signs denote the same portions, and an overlapping description will be omitted.

Further, the present disclosure will be described in the following order.

1. Introduction
2. System Configuration Example of Biological Sample Analysis Device
3. First Embodiment

    3.1 System Configuration Example
    3.2 Schematic Configuration Example of Event-Based Vision Sensor (EVS) Device
    3.3 Example of Time Delay Integration (TDI)-EVS Method
    3.4 Relationship between Event Detection Threshold and Noise
    3.5 Detailed Configuration Example of Event Data Processing Unit
    3.6 Evaluation Value Calculation Method
    3.7 Variations of Evaluation Function
    3.8 Operation Flow Example of Event Data Processing Unit
    3.9 Specific Example of Evaluation Value Calculation
    3.10 Operation Flow Example
    3.11 Example of Flow of Event Stream Acquisition Operation
    3.12 Conclusion

4. Second Embodiment

5. Third Embodiment

6. Hardware Configuration

1. Introduction

In a TDI-charge coupled device (CCD) imaging flow cytometer that transfers and integrates an exposure value of a CCD to an adjacent line in synchronization with a speed of a cell, for example, light reception amounts of all pixels on a line orthogonal to a movement direction of the cell in an image sensor are acquired, and the light reception amounts are added, that is, integrated, for each line at a timing synchronized with the speed of the cell, so that it is possible to acquire a favorable cell image in which there is no shaking caused by movement of the cell, and random noise having no correlation with the speed of the cell is reduced. A necessary data transfer amount is (the number of pixels per line) $\times$ (the number of bits per pixel) $\times$ (line rate).

Here, when the number of pixels and a pixel depth per line are 128 pixels and 8 bits, respectively, which are minimum required for cell analysis, a data transfer amount per line is $128 \times 8 = 1024$ bits at the line rate. Therefore, the line rate is limited to about 1/1000 of a data transfer band of the image sensor.

For example, the maximum line rate of the image sensor having the data transfer band of 40 Gbps (gigabits/second) is about 40 kHz (kilohertz), and when a resolution in the movement direction of the cell is 0.5 $\mu$m (micrometers), which is minimum required for cell analysis, the maximum cell speed that can be imaged is ($5 \times 10^{-7}$ m) $\times$ 40 kHz=0.02 m/s (meters/second). The maximum cell speed is 1/50 to 1/250 of a cell speed of 1 to 5 m/s used in a normal flow cytometer that performs analysis with a fluorescence intensity or scattered light intensity by a cell without using imaging, and thus cannot be said as being sufficient. Although a TDI-CCD method is illustrated here, the same applies to a TDI-complementary metal-oxide-semiconductor (CMOS) method in which a CMOS image sensor is adopted as an image sensor.

In the following embodiments, an event-based vision sensor (EVS) that outputs coordinates of a pixel that has detected a change in luminance (also referred to as light intensity), a direction (polarity) of the change in luminance, and a time (event data) in a synchronous or asynchronous manner is used as a sensor (detection unit) for acquiring information regarding a bioparticle (hereinafter, also referred to as bioparticle information). This makes it possible to greatly reduce a data size of the bioparticle information to be transferred, so that a restriction on the number of samples that can be observed per unit time is greatly relaxed, and as a result, it is possible to suppress redundancy of an analysis time.

Note that the bioparticle information may include at least one of image data (a bioparticle image described below) of a bioparticle reconstructed from the event data, a feature amount such as a shape, a size, or a color of the bioparticle extracted from the event data or the image data of the bioparticle, a speed (or a relative speed) of the bioparticle generated from the event data, the image data of the bioparticle, the feature amount of the bioparticle, or the like, attribute information indicating normality/abnormality, or the like.

In addition, in the following embodiments, an imaging method similar to a TDI method is implemented using the EVS. Hereinafter, this method is also referred to as a TDI-EVS method. By using the EVS in an imaging method similar to the TDI method, it is possible to acquire the bioparticle information with reduced noise or the like. For example, it is possible to acquire a clear image with a sufficient brightness of the bioparticle (hereinafter, also referred to as a bioparticle image). As a result, it is possible to improve analysis accuracy while suppressing redundancy of the analysis time.

However, not only in the TDI-EVS method but also in an imaging method adopting the TDI method, it is necessary to accurately synchronize the line rate with a speed at which a subject image moves on the image sensor in order to acquire a captured image with high image quality. However, it is difficult to accurately specify a speed of a subject such as a cell flowing through a flow channel in the imaging flow cytometer. Therefore, blurring or the like may occur in the captured image acquired by the imaging method adopting the TDI method, thereby degrading the image quality.

Therefore, in the following embodiment, a biological sample analysis system, an information processing device, an information processing method, and a biological sample analysis method capable of suppressing deterioration in image quality will be described with examples.

2. System Configuration Example of Biological Sample Analysis Device

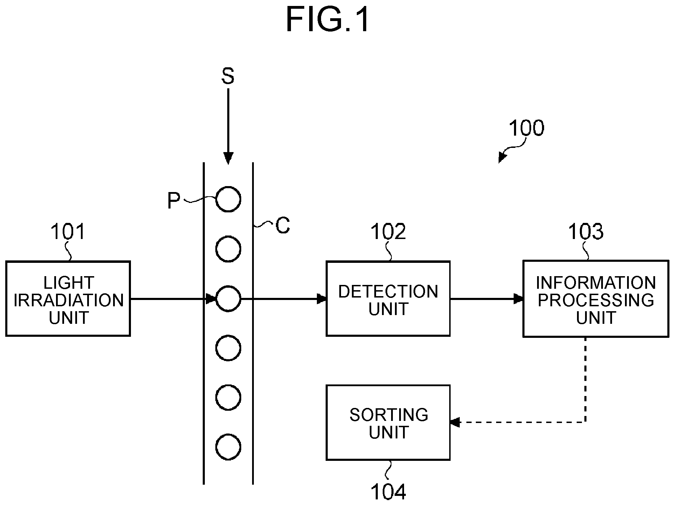

FIG. 1 illustrates a configuration example of the biological sample analysis device according to the present disclosure. A biological sample analysis device 100 illustrated in FIG. 1 includes a light irradiation unit 101 that irradiates a biological sample S flowing through a flow channel C with light, a detection unit 102 that detects the light generated by the irradiation, and an information processing unit 103 that processes information regarding the light detected by the detection unit 102. Examples of the biological sample analysis device 100 include a flow cytometer and an imaging flow cytometer. The biological sample analysis device 100 may include a sorting unit 104 that sorts a specific bioparticle P in the biological sample S. Examples of the biological sample analysis device 100 including the sorting unit 104 include a cell sorter.

(Biological Sample)

The biological sample S may be a liquid sample containing the bioparticle P. The bioparticle P is, for example, a cell or a non-cellular bioparticle. The cell may be a living cell, and more specific examples thereof include a blood cell such as a red blood cell or white blood cell, and a germ cell such as a sperm or a fertilized egg. The cell may be directly collected from a specimen such as whole blood, or may be a cultured cell obtained after culturing. Examples of the non-cellular bioparticle include an extracellular vesicle, particularly an exosome and a microvesicle. The bioparticle P may be labeled with one or more labeling substances (for example, a dye (particularly, a fluorescent dye) and a fluorescent dye-labeled antibody). Note that the biological sample analysis device 100 of the present disclosure may analyze a particle other than the bioparticle, or may analyze a bead or the like for calibration or the like.

(Flow Channel)

The flow channel C can be configured such that the biological sample S flows, in particular, a flow in which the bioparticles P contained in the biological sample S are substantially arranged in a row is formed. A flow channel structure including the flow channel C may be designed such that a laminar flow is formed, and in particular, is designed such that a laminar flow in which a flow of the biological sample S (sample flow) is surrounded by a flow of a sheath liquid is formed. The design of the flow channel structure may be appropriately selected by those skilled in the art, and a known flow channel structure may be adopted. The flow channel C may be formed in a flow channel structure such as a microchip (a chip having a micrometer-scale flow channel) or a flow cell. A width of the flow channel C is 1 mm (millimeter) or less, and may be particularly 10 μm (micrometer) or more and 1 mm or less. The flow channel C and the flow channel structure including the flow channel C may be formed of a material such as plastic or glass.

The device of the present disclosure may be configured such that the biological sample S flowing in the flow channel C, particularly, the bioparticle P in the biological sample S, is irradiated with light from the light irradiation unit 101. The device of the present disclosure may be configured such that an interrogation point of light with respect to the biological sample S is in the flow channel structure in which the flow channel C is formed, or may be configured such that the interrogation point of light is outside the flow channel structure. Examples of the former case can include a configuration in which the flow channel C in a microchip or flow cell is irradiated with light. In the latter case, the bioparticle P after exiting the flow channel structure (particularly, a nozzle portion thereof) may be irradiated with light, and examples thereof include a flow cytometer of a Jet-in-Air method.

(Light Irradiation Unit)

The light irradiation unit 101 includes a light source unit that emits light and a light guide optical system that guides the light to the flow channel C. The light source unit includes one or a plurality of light sources. Examples of the type of the light source include a laser light source and a light emitting diode (LED). A wavelength of light emitted from each light source may be any wavelength of ultraviolet light, visible light, or infrared light. The light guide optical system includes, for example, an optical component such as a beam splitter group, a mirror group, or an optical fiber. In addition, the light guide optical system may include a lens group for collecting light, and can include, for example, an objective lens. The biological sample S may be irradiated with light at one or more interrogation points. The light irradiation unit 101 may be configured to collect light emitted from one or a plurality of different light sources with respect to one interrogation point.

(Detection Unit)

The detection unit 102 includes at least one photodetector that detects light generated by irradiating the particle with light by the light irradiation unit 101. The light to be detected is, for example, fluorescence, scattered light (for example, any one or more of forward scattered light, backward scattered light, and side scattered light), transmitted light, or reflected light. Each photodetector includes one or more light receiving elements, for example, a light receiving element array. Each photodetector may include, as the light receiving element, one or a plurality of photodiodes such as a photomultiplier tube (PMT) and/or an avalanche photodiode (APD) and a multi-pixel photon counter (MPPC). The photodetector includes, for example, a PMT array in which a plurality of PMTs are arranged in a one-dimensional direction. Furthermore, the detection unit 102 may include an imaging element such as a charge coupled device (CCD) or a complementary metal-oxide-semiconductor (CMOS). The detection unit 102 can acquire the bioparticle information regarding the bioparticle P by the imaging element.

As described above, the bioparticle information can include at least one of the bioparticle image of the bioparticle, the feature amount of the bioparticle, the attribute information of the bioparticle, or the like. Furthermore, the bioparticle image of the bioparticle may include, for example, a bright field image, a dark field image, a fluorescence image, and the like.

The detection unit 102 includes a detection optical system that allows light having a predetermined detection wavelength to reach a corresponding photodetector. The detection optical system includes a spectroscopic unit such as a prism or a diffraction grating, or a wavelength separation unit such as a dichroic mirror or an optical filter. The detection optical system may be configured, for example, to spectrally separate light from the bioparticle P and detect light in different wavelength ranges by a plurality of photodetectors more than the number of fluorescent dyes. A flow cytometer including such a detection optical system is referred to as a spectral flow cytometer. Furthermore, for example, the detection optical system may be configured to separate light corresponding to a fluorescence wavelength range of the fluorescent dye from light from the bioparticle P, and cause a corresponding photodetector to detect the separated light.

Furthermore, the detection unit 102 may include a signal processing unit that converts an electric signal obtained by the photodetector into a digital signal. The signal processing unit may include an A/D converter as a device that performs the conversion. The digital signal obtained by the conversion by the signal processing unit can be transmitted to the information processing unit 103. The digital signal can be handled as data regarding light (hereinafter also referred to as "light data") by the information processing unit 103. The light data may be, for example, light data including fluorescence data. More specifically, the light data may be light intensity data, and the light intensity may be light intensity data (feature amounts such as an area, height, and width may be included) of light including fluorescence.

(Information Processing Unit)

The information processing unit 103 includes, for example, a processing unit that executes processing of various data (for example, the light data) and a storage unit that stores various data. When acquiring the light data corresponding to the fluorescent dye from the detection unit 102, the processing unit can perform fluorescence leakage correction (compensation processing) on the light intensity data. In addition, in a case of the spectral flow cytometer, the processing unit executes fluorescence separation processing on the light data and acquires the light intensity data corresponding to the fluorescent dye.

The fluorescence separation processing may be executed according to, for example, an unmixing method described in JP 2011-232259 A. In a case where the detection unit 102 includes the imaging element, the processing unit may acquire form information of the bioparticle P based on an image acquired by the imaging element. The storage unit may be configured to be able to store the acquired light data. The storage unit may be further configured to be able to store spectral reference data used in the unmixing processing.

In a case where the biological sample analysis device 100 includes the sorting unit 104 described below, the information processing unit 103 can determine whether to sort the bioparticle P based on the light data and/or the form information. Then, the information processing unit 103 controls the sorting unit 104 based on the determination result, and the bioparticle P can be sorted by the sorting unit 104.

The information processing unit 103 may be configured to be able to output various data (for example, the light data and image). For example, the information processing unit 103 can output various data (for example, a two-dimensional plot and a spectral plot) generated based on the light data. Furthermore, the information processing unit 103 may be configured to be able to receive various data, and for example, receives gating processing on a plot by a user. The information processing unit 103 can include an output unit (for example, a display) or an input unit (for example, a keyboard) for output or input.

The information processing unit 103 may be configured as a general-purpose computer, and may be configured as an information processing device including, for example, a central processing unit (CPU), a random access memory (RAM), and a read only memory (ROM). The information processing unit 103 may be provided in a housing in which the light irradiation unit 101 and the detection unit 102 are provided, or may be outside the housing. Furthermore, various processes or functions executed by the information processing unit 103 may be implemented by a server computer or a cloud connected via a network.

(Sorting Unit)

The sorting unit 104 can sort the bioparticle P, for example, according to the determination result of the information processing unit 103. A method for performing the sorting may be a method in which a droplet containing the bioparticle P is generated by vibration, a charge is applied to the droplet to be sorted, and a traveling direction of the droplet is controlled by an electrode. The method for performing the sorting may be a method in which the sorting is performed by controlling the traveling direction of the bioparticle P in the flow channel structure. For example, a control mechanism using a pressure (injection or suction) or charge is provided in the flow channel structure. Examples of the flow channel structure include a chip (for example, a chip described in JP 2020-76736 A) having a flow channel structure in which the flow channel C branches into a collection flow channel and a waste liquid flow channel on a downstream side thereof, and a specific bioparticle P is collected into the collection flow channel.

3. First Embodiment

Next, a biological sample analysis system, an information processing device, an information processing method, and a biological sample analysis method according to a first embodiment of the present disclosure will be described in detail with reference to the drawings.

3.1 System Configuration Example

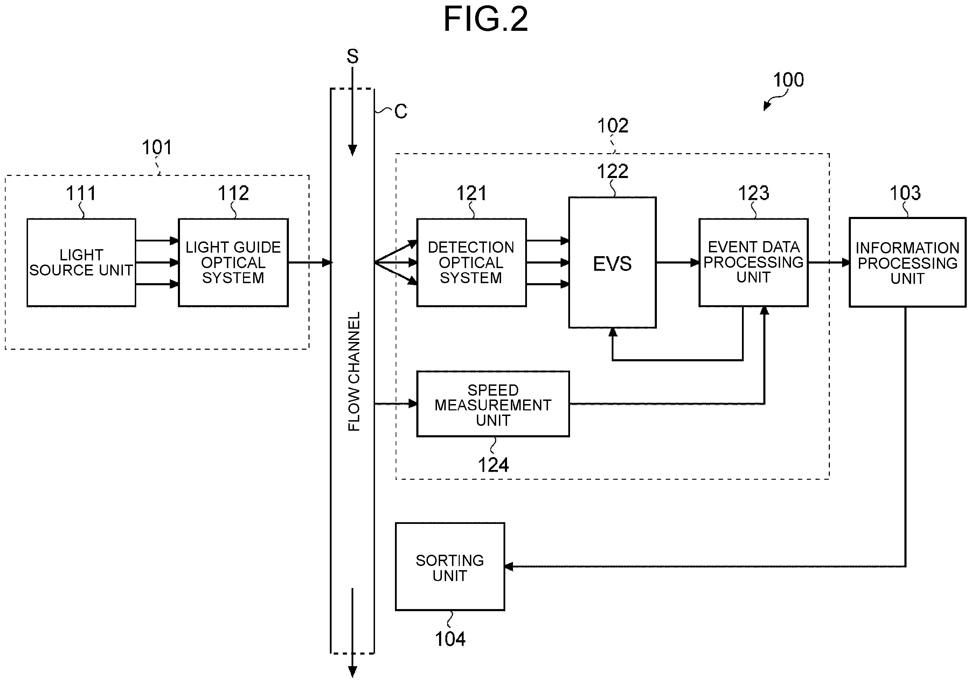

FIG. 2 is a block diagram illustrating a more specific configuration example of the biological sample analysis device according to the present embodiment. In the present embodiment and the following embodiment, the biological sample analysis device may be configured as a system in which a plurality of devices are combined.

As illustrated in FIG. 2, a biological sample analysis device 100 according to the present embodiment includes a light source unit 111 and a light guide optical system 112 included in a light irradiation unit 101, a detection optical system 121, an EVS device 122, an event data processing unit 123, and a speed measurement unit 124 included in a detection unit 102, an information processing unit 103, and a sorting unit 104, and observes an image of fluorescence, reflected light, and/or transmitted light emitted from the bioparticle P in the biological sample S flowing through the flow channel C. Note that the light source unit 111, the light guide optical system 112, the detection optical system 121, the information processing unit 103, and the sorting unit 104 may be similar to those described above with reference to FIG. 1.

More specifically, light (hereinafter, also referred to as excitation light) output from the light source unit 111 is collected by the light guide optical system 112. The collected light is applied to the bioparticle P flowing at a high speed in the flow channel C through which the biological sample S in which the bioparticle P floats flows. An image of the reflected light or transmitted light and/or fluorescence emitted from the bioparticle P irradiated with light is formed on a light receiving surface of the EVS device 122 through the detection optical system 121.

(EVS)

The EVS device 122 includes, for example, pixels (hereinafter, referred to as event pixels) arranged in a two-dimensional lattice pattern, details of which will be described later. Each event pixel detects an event based on a luminance change of incident light. The EVS device 122 outputs event data including position information (an X address and a Y address) of the pixel that has detected the event, polarity information (positive event/negative event) of the detected event, information (time stamp) of a time when the event has been detected, and the like.

A series of event data (hereinafter, also referred to as an event stream) generated in each pixel corresponding to an image of the bioparticle P moving on the light receiving surface of the EVS device 122 is sent to the event data processing unit 123.

(Speed Measurement Unit)

The speed measurement unit 124 measures, for example, a relative speed of the bioparticle P flowing through the flow channel C with respect to the speed measurement unit 124. In this example, a case where the speed measurement unit 124 is stationary with respect to the flow channel C is exemplified. Therefore, in the following description, the speed measurement unit 124 is referred to as measuring the speed of the bioparticle P.

For the speed measurement unit 124, various detection methods capable of detecting the speed of the bioparticle P, such as an electrostatic method and an optical method, may be adopted. The speed of the bioparticle P detected by the speed measurement unit 124 is sent to the event data processing unit 123 as needed.

The speed measurement unit 124 may be omitted in a case where the speed of the bioparticle P is known, such as a case where the speed of the bioparticle P flowing through the flow channel C is controlled to be maintained at a desired speed by controlling a pump system that delivers the biological sample S. However, even in a case where the speed of the bioparticle P is known, the speed of the bioparticle P may fluctuate due to an ambient temperature, a change in resistance of a liquid delivery system, or the like. Therefore, the speed of the bioparticle P may be actually measured using the speed measurement unit 124.

(Event Data Processing Unit)

The event data processing unit 123 reconstructs frame data of the image of the bioparticle P from the event stream input from the EVS device 122 and the speed of the bioparticle P, and sends the reconstructed frame data to the information processing unit 103.

A speed change of the bioparticle P is sufficiently gentle as compared with an arrival frequency of the bioparticle P. Therefore, the speed of the bioparticle P used for reconstructing the frame data is not limited to the speed of the bioparticle P itself included in the frame data to be reconstructed, and may be the speed of the bioparticle P arriving therebefore and/or thereafter, an average value, or the like.

(Information Processing Device)

The information processing unit 103 analyzes the frame data input from the event data processing unit 123, and performs correction to offset rotation of the bioparticle P moving in the flow channel C, extraction of a feature amount thereof, discrimination of the type of the bioparticle P, and the like. Furthermore, the information processing unit 103 may include a display unit, and may present the bioparticle information used for the analysis, and the feature amount, statistical data, the type discrimination result, and the like based on the analysis result to the user. Furthermore, the information processing unit 103 may sort and collect the bioparticle P of a specific type by controlling the sorting unit 104 based on the type discrimination result for the bioparticle P.

3.2 Schematic Configuration Example of Event-Based Vision Sensor (EVS) Device

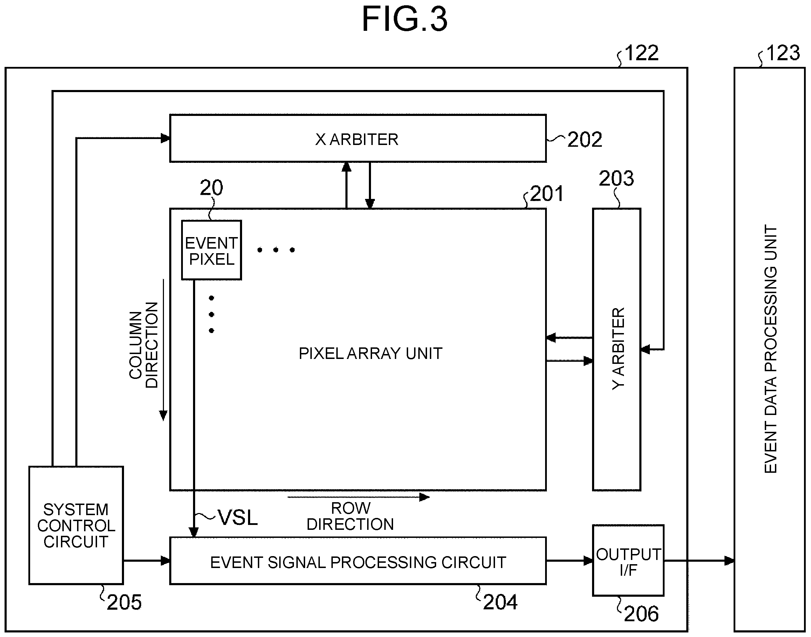

Next, a schematic configuration example of the EVS device 122 will be described. FIG. 3 is a block diagram illustrating a schematic configuration example of the EVS device according to the present embodiment. As illustrated in FIG. 3, the EVS device 122 includes a pixel array unit 201, an X arbiter 202, a Y arbiter 203, an event signal processing circuit 204, a system control circuit 205, and an output interface (I/F) 206.

The pixel array unit 201 has a configuration in which a plurality of event pixels 20 that each detect an event based on a luminance change of incident light are arranged in a two-dimensional lattice pattern. In the following description, a row direction refers to an arrangement direction of the pixels in a pixel row (a lateral direction in the drawings), and a column direction refers to an arrangement direction of the pixels in a pixel column (a longitudinal direction in the drawings).

Each event pixel 20 includes a photoelectric conversion element that generates a charge according to a luminance of incident light. In a case where the luminance change of the incident light is detected based on a photocurrent flowing out from the photoelectric conversion element, the event pixel outputs a request for reading from itself to the X arbiter 202 and the Y arbiter 203, and outputs an event signal indicating that an event has been detected according to arbitration by the X arbiter 202 and the Y arbiter 203.

Each event pixel 20 detects the presence or absence of an event based on whether or not a change exceeding a predetermined threshold has occurred in the photocurrent according to the luminance of the incident light. For example, each event pixel 20 detects, as the event, a luminance change that exceeds a predetermined threshold (positive event) or a luminance change that falls below the predetermined threshold (negative event).

When the event has been detected, the event pixel 20 outputs a request for permission to output the event signal indicating the occurrence of an event to each of the X arbiter 202 and the Y arbiter 203. Then, the event pixel 20 outputs the event signal to the event signal processing circuit 204 when a response indicating permission to output the event signal is received from each of the X arbiter 202 and the Y arbiter 203.

The X arbiter 202 and the Y arbiter 203 arbitrate a request for output of the event signal supplied from each of the plurality of event pixels 20, and transmit a response based on the arbitration result (permission/non-permission of the output of the event signal) and a reset signal for resetting event detection to the event pixel 20 that has output the request.

The event signal processing circuit 204 generates and outputs the event data by executing predetermined signal processing on the event signal input from the event pixel 20.

As described above, the change in photocurrent generated in the event pixel 20 can also be regarded as a light amount change (luminance change) of light incident on the photoelectric conversion unit of the event pixel 20. Therefore, it can also be said that the event is a light amount change (luminance change) of the event pixel 20 exceeding the predetermined threshold. The event data indicating the occurrence of an event includes at least the position information such as coordinates indicating the position of the event pixel 20 where the light amount change as the event has occurred. The event data can include polarity of light amount change in addition to the position information.

For a series of event data output from the event pixel 20 at a timing when the event has occurred, as long as an interval between pieces of event data when the event has occurred is maintained, it can be said that the event data implicitly includes time information indicating a relative time when the event has occurred.

However, when the interval between the pieces of event data when the event has occurred is not maintained due to the event data being stored in a memory or the like, the time information implicitly included in the event data is lost. Therefore, the event signal processing circuit 204 may include, in the event data, the time information indicating the relative time at which the event has occurred, such as a time stamp, before the interval between the pieces of event data when the event occurs is not maintained.

(Other Configurations)

The system control circuit 205 includes a timing generator that generates various timing signals, and the like, and performs drive control of the X arbiter 202, the Y arbiter 203, the event signal processing circuit 204, and the like based on various timings generated by the timing generator.

The output I/F 206 sequentially outputs, as the event stream to the event data processing unit 123, the pieces of event data output in units of rows from the event signal processing circuit 204.

3.3 Example of TDI-EVS Method

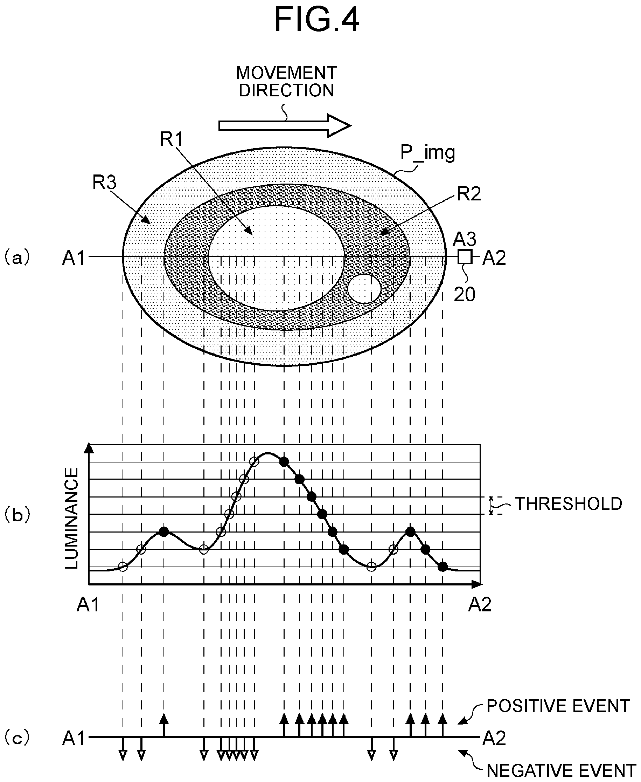

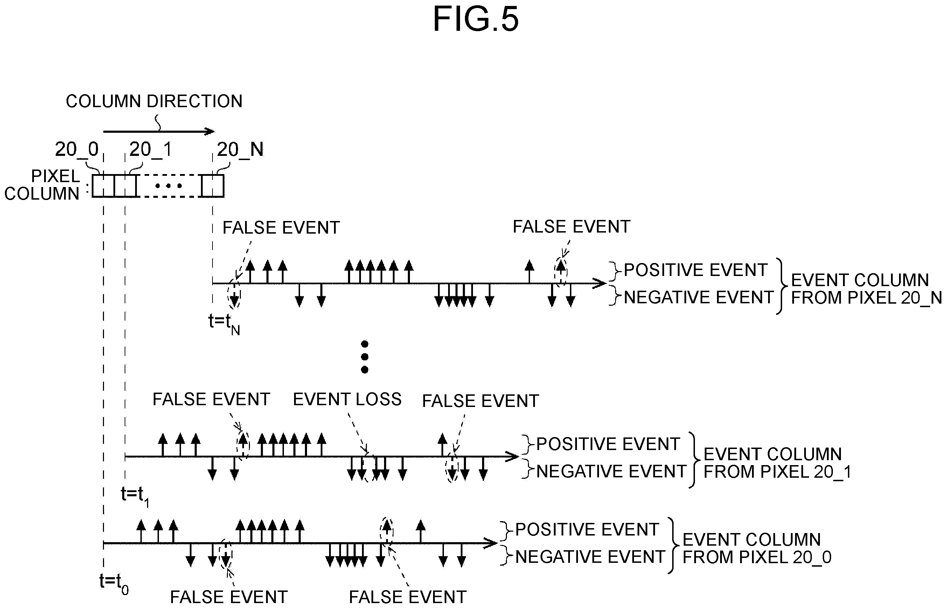

Next, an operation example of the TDI-EVS method according to the present embodiment will be described. FIG. 4 is a diagram for describing an event detected for each position in the image of the bioparticle, and FIGS. 5 to 8 are diagrams for describing an operation example of the TDI-EVS method according to the present embodiment.

In the following description, a case where the movement direction of the bioparticle P is aligned with the column direction is exemplified, but the present disclosure is not limited thereto, and the movement direction of the bioparticle P may be aligned with the row direction. In this case, a pixel column in the following description is replaced with a pixel row, and the column direction is replaced with the row direction. Note that the pixel column may be a column of the event pixels 20 arranged in the column direction, and the pixel row may be a column of the event pixels 20 arranged in the row direction.

In FIG. 4, (a) illustrates an image P_img of the bioparticle P formed on the light receiving surface of the EVS device 122 and a movement direction D thereof, (b) illustrates a luminance of the image P_img along a line segment A1-A2, and (c) illustrates an example of an event detected along the line segment A1-A2 when the image P_img moves in the movement direction.

In this example, it is assumed that a luminance distribution along the line segment A1-A2 in the image P_img of the bioparticle P illustrated in (a) of FIG. 4 is a distribution in which a luminance of a region R1 of a central nucleus is the highest, a luminance of a region R2 outside the region R1 is slightly low, and a luminance of a region R3 of a film in an outer peripheral portion is slightly high, as illustrated in (b). In this case, when the image P_img moves in the movement direction so as to pass through the event pixel 20 positioned at a point A3 on the line segment A1-A2, as illustrated in (c) of FIG. 4, the event pixel 20 positioned at the point A3 on the line segment A1-A2 detects a positive event at a position on the line segment A1-A2 where the luminance has increased by a predetermined threshold (hereinafter, referred to as an event detection threshold) or more, and detects a negative event at a position on the line segment A1-A2 where the luminance has decreased by the event detection threshold or more.

FIG. 5 illustrates a case where detection of an event column illustrated in FIG. 4 is applied to the pixel column arranged in the column direction parallel to the movement direction of the image P_img. FIG. 5 illustrates an example of the event column detected in each of event pixels 20_0 to 20_N of the pixel column corresponding to the line segment A1-A2 in a case where the image P_img of the bioparticle P illustrated in (a) of FIG. 4 moves in the column direction of the pixel array unit 201. Note that the pixel column is not limited to an array of two or more event pixels 20, and may be one event pixel 20.

As illustrated in FIG. 5, in each of the event pixels 20_0 to 20_N in the pixel column corresponding to the line segment A1-A2, the event column illustrated in (c) of FIG. 4 is detected. However, in each event column, a false event in which occurrence of the event is erroneously detected even though no event has occurred or an event loss in which the event is not detected even though the event has originally occurred is included as noise. Usually, such a false event or event loss occurs randomly.

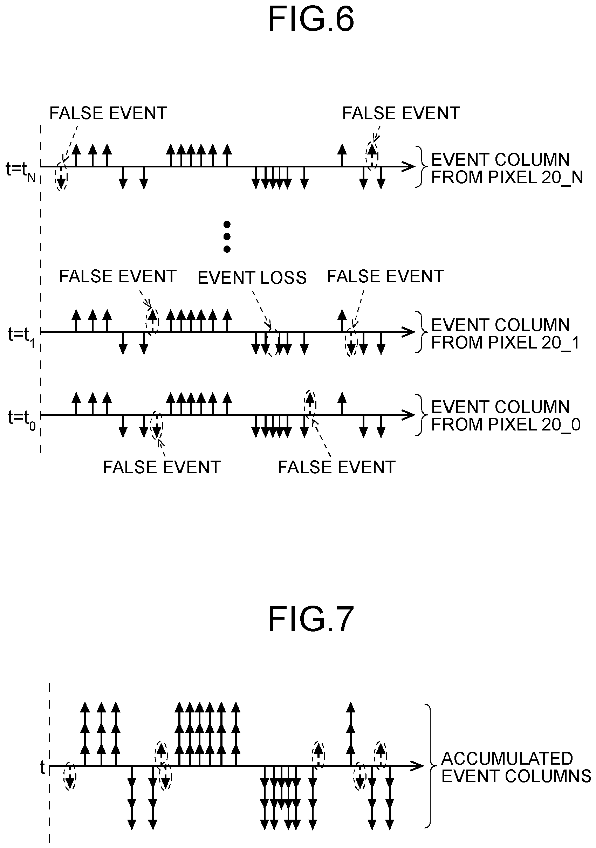

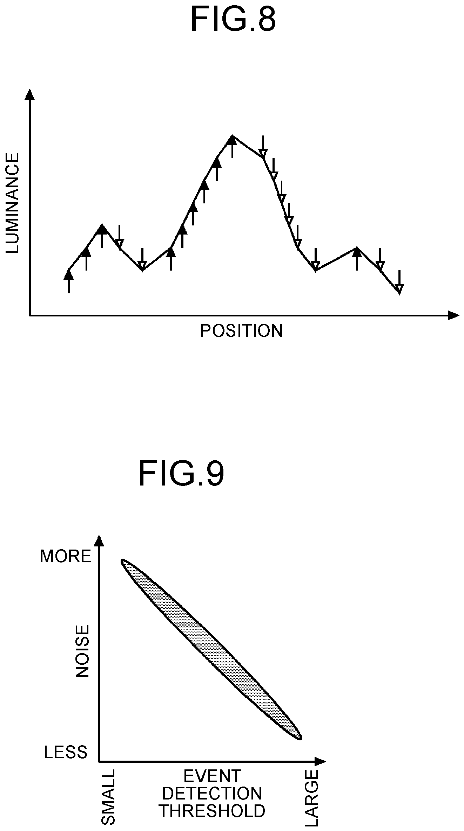

Therefore, in the present embodiment, as illustrated in FIG. 6, times of the event streams, which are columns of the event data obtained by converting the event columns detected by the event pixels 20_0 to 20_N into data, are aligned, and the event streams with the aligned times are added (also referred to as superimposed) on a time axis. In this case, as illustrated in FIG. 7, a correct positive event and a correct negative event detected according to the luminance change are accumulated, and the random false event and event loss are offset and not accumulated. As a result, as illustrated in FIG. 8, it is possible to reconstruct the luminance change based on the correct positive event and negative event.

In the reconstruction of the luminance change, for example, the luminance change along the line segment A1-A2 of the bioparticle P may be reconstructed by increasing the luminance value in the positive event and dividing the luminance value in the negative event in time series. However, the present disclosure is not limited thereto, and for example, various methods such as a method of obtaining a luminance gradient between events based on an occurrence interval of the events in time series and reconstructing the luminance change along the line segment A1-A2 of the bioparticle P using the luminance gradient, and a method of performing machine learning using the event stream before or after addition as an input and the luminance change as an output may be used.

Furthermore, arrival of the image P_img at the event pixel 20 (hereinafter, referred to as a head pixel) at which the image P_img of the bioparticle P arrives first in the pixel column can be detected, for example, by monitoring the event stream of the head pixel output from the EVS device 122. For example, the arrival of the image P_img at the head pixel can be detected from an occurrence frequency, an occurrence pattern, and the like of the event in the event stream of the head pixel.

Furthermore, a shift amount of time for aligning the times of the event streams (also referred to as a correction amount) can be determined based on, for example, the speed of the bioparticle P measured by the speed measurement unit 124 and an interval of the event pixels 20 in the movement direction of the bioparticle P. That is, a movement time between the pixels of the image P_img of the bioparticle P is calculated from the speed of the bioparticle P and a pitch of the event pixels 20, and the time stamp in the event data of each event stream is adjusted using the movement time as the shift amount, whereby the times of the respective event streams can be aligned.

However, the alignment of the times of the event streams is not limited to the above method, and various modifications may be made. For example, a method of detecting the arrival of the image P_img of the bioparticle P in each event pixel 20 in the same pixel column and using a difference between the detected times as the shift amount may be used. In this case, the shift amount (for example, an initial value of the shift amount) can be calculated by computation based on accurate time stamp information, and thus, an effect such as reduction in signal processing cost can be expected.

In addition, the movement speed of the image P_img of the bioparticle P is considered to be equivalent in two or more pixel columns. Therefore, the shift amount may be determined based on, for example, an average value of differences in time at which the arrival of the image P_img is detected in each of the two or more pixel columns.

3.4 Relationship between Event Detection Threshold and Noise

As described above, in the present embodiment, the luminance change is reconstructed based on the positive event and the negative event. Therefore, it is necessary to set an event occurrence threshold to be sufficiently small in order to obtain the number of gradations (luminance resolution) for satisfactorily reproducing the image P_img of the bioparticle P. However, as illustrated in FIG. 9, the event detection threshold and the noise are in a trade-off relationship. Therefore, when the event detection threshold is reduced, the noise such as the false event or event loss irrelevant to the luminance change of the image P_img increases. The event detection threshold may be determined based on, for example, at least one of the type of the biological sample S, the type of the fluorescent dye that labels the bioparticle P, or the intensity of the light (laser light) output from the light source unit 111.

However, as in the present embodiment, in a case where the times of the event streams detected by the plurality of event pixels 20 in the same pixel column, respectively, are aligned and then the event streams are added together, the correct positive event and negative event are enhanced, but the random false event and event loss are not enhanced. Therefore, an S/N ratio can be increased. As a result, even in a case where the number of gradations is increased by decreasing the event detection threshold, it is possible to generate highly accurate bioparticle information regarding the bioparticle P. For example, it is possible to reconstruct the bioparticle image in which the image P_img of the bioparticle P is favorably reproduced.

3.5 Detailed Configuration Example of Event Data Processing Unit

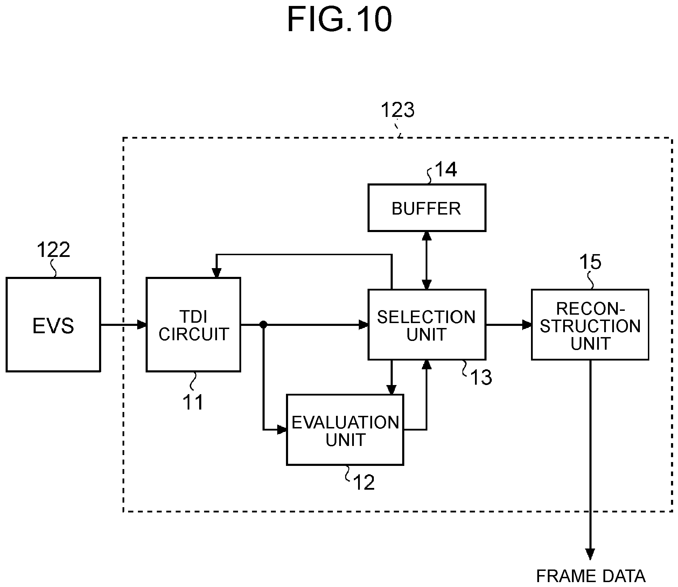

Next, a detailed configuration example of the event data processing unit 123 according to the present embodiment will be described with reference to the drawings. FIG. 10 is a block diagram illustrating a more detailed configuration example of the event data processing unit according to the present embodiment.

As illustrated in FIG. 10, the event data processing unit 123 includes a TDI circuit 11, an evaluation unit 12, a selection unit 13, a buffer 14, and a reconstruction unit 15.

(TDI Circuit 11)

The TDI circuit (also referred to as a generation unit) 11 generates event image data by aligning the time of the event data output as the event stream from the EVS device 122 for each event pixel 20 and adding (superimposing) the polarities of the event data. The event image data is image data generated using the event stream input during a certain frame period, and may be, for example, two-dimensional data (also referred to as event information) including a set of the event data counted for each pixel as described with reference to FIGS. 4 to 8.

Here, the TDI circuit 11 according to the present embodiment generates a plurality of pieces of event image data from the event streams input during a certain frame period by varying the shift amount (that is, the movement time between the pixels of the image P_img of the bioparticle P, which corresponds to the speed of the bioparticle P) when generating the event image data by TDI processing.

The variation of the shift amount (hereinafter, also referred to as a shift amount candidate value) may be various values such as a plurality of values registered in advance, two or more values narrowed down from the plurality of values based on the optimum shift amount (the initial value in a case of the first frame) specified in the previous frame, and two or more values set at predetermined intervals before and/or after the shift amount specified in the previous frame as a reference.

A plurality of pieces of event image data having different feature amounts generated using a plurality of shift amount candidate values are input to the evaluation unit 12 and the selection unit 13 in the order of generation. The shift amount used for the generation may be added to the event image data as meta information.

(Evaluation Unit 12)

The evaluation unit 12 calculates an evaluation value of the input event image data and outputs the calculated evaluation value to the selection unit 13. Here, the evaluation value may be a value corresponding to image quality of frame data reconstructed from the event image data. A method of calculating the evaluation value by the evaluation unit 12 will be described in detail later.

(Selection Unit 13)

The selection unit 13 inputs one of the pieces of event image data sequentially input from the TDI circuit 11 to the reconstruction unit 15. For example, the selection unit 13 inputs the event image data having the highest evaluation value to the reconstruction unit 15.
Specifically, for example, the selection unit 13 stores the event image data initially input for a certain frame in the buffer 14. At this time, the selection unit 13 may hold the evaluation value input from the evaluation unit 12 for the event image data stored in the buffer 14 in a registry (not illustrated) or the like. Furthermore, the buffer 14 may be, for example, a frame buffer or the like.
Next, in a case where the evaluation value of the subsequently input event image data is higher than the evaluation value of the event image data stored in the buffer 14, the selection unit 13 updates the event image data in the buffer 14 with the event image data having a higher evaluation value. At this time, the registry or the like may be updated with the evaluation value of the event image data used for the update.
Thereafter, when the update of the buffer 14 is completed based on all the pieces of event image data related to a certain frame, the selection unit 13 inputs the event image data stored in the buffer 14 to the reconstruction unit 15.

(Reconstruction Unit 15)

As described above with reference to FIG. 8, the reconstruction unit (also referred to as a processing unit) 15 reconstructs the frame data as the image data by reconstructing the luminance change based on the polarity of the event data counted for each pixel of the event image data. The reconstructed frame data is input to the information processing unit 103 (see FIG. 2).

3.6 Evaluation Value Calculation Method

Next, a method of calculating the evaluation value by the evaluation unit 12 will be described. The evaluation value of the event image data is calculated such that, for example, the lower the image quality degradation such as blurring or shaking in the frame data reconstructed from the event image data, the higher the evaluation value.
Therefore, an evaluation value e(i) that becomes a higher value as the image quality degradation is lower can be calculated using, for example, an evaluation function shown in the following Equation (1). In Equation (1), n_p represents the number of pixels to which only the positive event is assigned in the event image data, n_n represents the number of pixels to which only the negative event is assigned, and n_pn is the number of pixels to which both the positive event and the negative event are assigned. Further, n_p_e(i) represents the number of positive events of the i-th (i is a natural number) pixel among the pixels in which only the positive event has been detected, and n_n_e(i) represents the number of negative events of the i-th pixel among the pixels in which only the negative event has been detected. Further, w() is a weighting coefficient. The weighting coefficient w() may be adjusted in a range of, for example, 0 to 1 according to an imaging condition or the like. However, when weighting is not performed, w() may be omitted. The following equations including Equation (1) are based on the assumption that the denominator is not zero. That is, it is assumed that when the denominator is the sum, at least one of n_p or n_n (or n_pn) is 1 or more, and when the denominator is the product, all of n_p and n_n (and n_pn) are 1 or more.

$$e(i) = \frac{\sum_i^{n\_p} w(n\_p\_e(i)) \times n\_p\_e(i) + \sum_i^{n\_n} w(n\_n\_e(i)) \times n\_n\_e(i)}{n\_p + n\_n + n\_pn}$$

$$\cdots (1)$$

As described above, in the evaluation function shown in Equation (1), for the event image data with the shift amount candidate value = i, a value obtained by dividing the sum (or weighted sum) of the total number of positive events ($\Sigma$ (n_p_e(i)) in the pixels to which only the positive events are assigned and the total number of negative events ($\Sigma$(n_n_e(i))) in the pixels to which only the negative events are assigned by the sum of the number of pixels n_p to which only the positive events are assigned, the number of pixels n_n to which only the negative events are assigned, and the number of pixels n_pn to which both the positive events and the negative events are assigned is calculated as the evaluation value e(i).

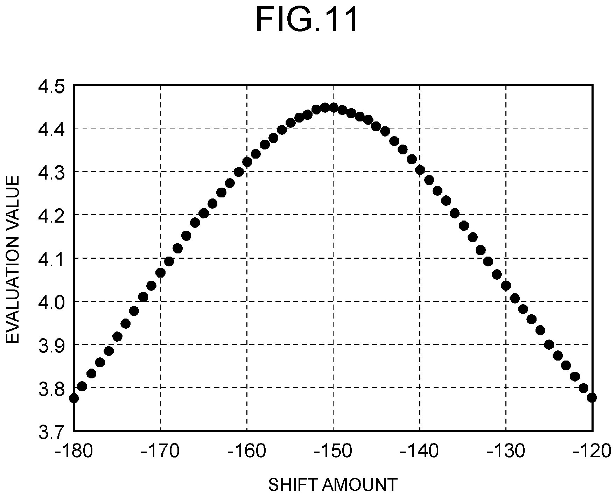

By calculating the evaluation value e(i) using the evaluation function as described above, it is possible to acquire a higher evaluation value e(i) as the image quality degradation in the reconstructed frame data is lower as illustrated in FIG. 11. FIG. 11 is a diagram illustrating an example of the evaluation value calculated by the evaluation function according to the present embodiment, and is a diagram illustrating a result of plotting the evaluation value e(i) obtained at each shift amount candidate value from the event image data acquired under a certain imaging condition in a case where the shift amount candidate value (= the interval (also referred to as a pixel pitch) of the event pixels 20/the speed of the bioparticle P) is set in increments of 1 in a range of -180 to -120. In the example illustrated in FIG. 11, the highest evaluation value e(i) is obtained when the shift amount = -151. Therefore, it is predicted that the image quality of the frame data reconstructed from the event image data generated with the shift amount = -151 is the highest.

The polarity of the event in the pixel where the event has occurred should be either positive or negative. Therefore, there is a high possibility that the pixel to which both the positive event and the negative event are assigned is a pixel including an error (also referred to as noise) (hereinafter, also referred to as an error pixel). Therefore, by including the number n_pn of pixels to which both the positive event and the negative event are assigned in the denominator of the evaluation function as in Equation (1), it is possible to lower the evaluation value e(i) calculated as the number of error pixels increases. As a result, the selection unit 13 can select the event image data with few error pixels, and thus, it is possible to improve the image quality of the frame data to be reconstructed in the reconstruction unit 15.

3.7 Variations of Evaluation Function

The evaluation function for calculating the evaluation value e(i) is not limited to Equation (1) described above, and various evaluation functions can be adopted. The following Equations (2) to (18) show some of the variations of the evaluation function for calculating the evaluation value e(i).

For example, the following Equations (2) and (3) each show the evaluation function for calculating the evaluation value e(i) for only one of the positive event and the negative event.

$$e(i) = \frac{\sum_i^{n\_p} w(n\_p\_e(i)) \times n\_p\_e(i)}{n\_p + n\_pn} \qquad \cdots (2)$$

$$e(i) = \frac{\sum_i^{n\_n} w(n\_n\_e(i)) \times n\_n\_e(i)}{n\_n + n\_pn} \qquad \cdots (3)$$

In the following Equations (4) to (6), a case where the numerator in each of Equations (1) to (3) above is set to "1" is exemplified. As described above, even in a case where the sum (or weighted sum) of the total number of positive events ($\Sigma$ (n_p_e(i)) in the pixel to which only the positive event is assigned and the total number of negative events ($\Sigma$(n_n_e(i)) in the pixel to which only the negative event is assigned is a fixed value ("1" in this example), the evaluation value e(i) of the event image data in which blurring, shaking, or the like is likely to occur in the frame data to be reconstructed can be lowered similarly to Equations (1) to (3).

$$e(i) = \frac{1}{n\_p + n\_n + n\_pn} \qquad \cdots (4)$$

$$e(i) = \frac{1}{n\_p + n\_pn} \qquad \cdots (5)$$

$$e(i) = \frac{1}{n\_n + n\_pn} \qquad \cdots (6)$$

In the following Equations (7) to (12), a case where n_pn of the denominator is omitted from Equations (1) to (6) above is exemplified. That is, n_pn of the denominator in the evaluation function is not essential and may be omitted.

$$e(i) = \frac{\sum_{i}^{n\_p} w(n\_p\_e(i)) \times n\_p\_e(i) + \sum_{i}^{n\_n} w(n\_n\_e(i)) \times n\_n\_e(i)}{n\_p + n\_n}$$

$$\cdots (7)$$

$$e(i) = \frac{\sum_{i}^{n\_p} w(n\_p\_e(i)) \times n\_p\_e(i)}{n\_p} \qquad \cdots (8)$$

$$e(i) = \frac{\sum_{i}^{n\_n} w(n\_n\_e(i)) \times n\_n\_e(i)}{n\_n} \qquad \cdots (9)$$

$$e(i) = \frac{1}{n\_p + n\_n} \qquad \cdots (10)$$

$$e(i) = \frac{1}{n\_p} \qquad \cdots (11)$$

$$e(i) = \frac{1}{n\_n} \qquad \cdots (12)$$

Furthermore, as shown in the following Equation (13), it is also possible to evaluate the event image data based on only the error pixel.

$$e(i) = \frac{1}{n\_pn} \qquad \cdots (13)$$

In addition, in Equations (1) to (10) above, a case where the denominator and/or the numerator are each the sum of the numbers has been exemplified, but the present disclosure is not limited thereto, and at least one of the denominator or the numerator may be the product as exemplified in the following Equations (14) to (18). Since there is a possibility that the number n_pn of error pixels is zero, the evaluation function in which n_pn is not included in the denominator is exemplified below.

$$e(i) = \frac{\left(\sum_{i}^{n\_p} w(n\_p\_e(i)) \times n\_p\_e(i)\right) \times \left(\sum_{i}^{n\_n} w(n\_n\_e(i)) \times n\_n\_e(i)\right)}{n\_p \times n\_n}$$

$$\cdots (14)$$

$$e(i) = \frac{\left(\sum_{i}^{n\_p} w(n\_p\_e(i)) \times n\_p\_e(i)\right) \times \left(\sum_{i}^{n\_n} w(n\_n\_e(i)) \times n\_n\_e(i)\right)}{n\_p + n\_n + n\_pn}$$

$$\cdots (15)$$

$$e(i) = \frac{\sum_{i}^{n\_p} w(n\_p\_e(i)) \times n\_p\_e(i) + \sum_{i}^{n\_n} w(n\_n\_e(i)) \times n\_n\_e(i)}{n\_p \times n\_n}$$

$$\cdots (16)$$

$$e(i) = \frac{\left(\sum_{i}^{n\_p} w(n\_p\_e(i)) \times n\_p\_e(i)\right) \times \left(\sum_{i}^{n\_n} w(n\_n\_e(i)) \times n\_n\_e(i)\right)}{n\_n + n\_n}$$

$$\cdots (17)$$

$$e(i) = \frac{1}{n\_p \times n\_n} \qquad \cdots (18)$$

In addition, for example, in Equations (1) to (18) above, the denominator and the numerator may be interchanged. In this case, the evaluation value e(i) having a lower value may be calculated for the event image data for which it is estimated that the image quality of the reconstructed frame data is more favorable. The weighting coefficient w() may be adjusted to a value at which the denominator is not zero.

In addition, a value of each of n_p, n_n, and n_pn, the total value of two or more values of n_p, n_n, and n_pn, or the like may be obtained as the evaluation value. Such an evaluation value uses the fact that the number of pixels to which only the positive event is assigned, the number of pixels to which only the negative event is assigned, and the number of pixels to which both the positive event and the negative event are assigned tend to decrease as the shift amount approaches the speed of the bioparticle P. In this case, the smaller the evaluation value, the higher the evaluation.

Furthermore, for the event image data, the sum of the number of pixels (hereinafter, also referred to as the most frequent pixel) to which n_p_e(i) is most frequently assigned and the number of pixels (most frequent pixels) to which n_n_e(i) is most frequently assigned may be used as the evaluation value. Such an evaluation value uses the fact that the most frequent pixel tends to increase in each of the positive event pixel and the negative event pixel as the shift amount approaches the speed of the bioparticle P. In this case, the larger the evaluation value, the higher the evaluation. In a case where the evaluation value is the same for the plurality of shift amount candidate values, the shift amount candidate value having the higher most frequent value may be adopted.

3.8 Operation Flow Example of Event Data Processing Unit

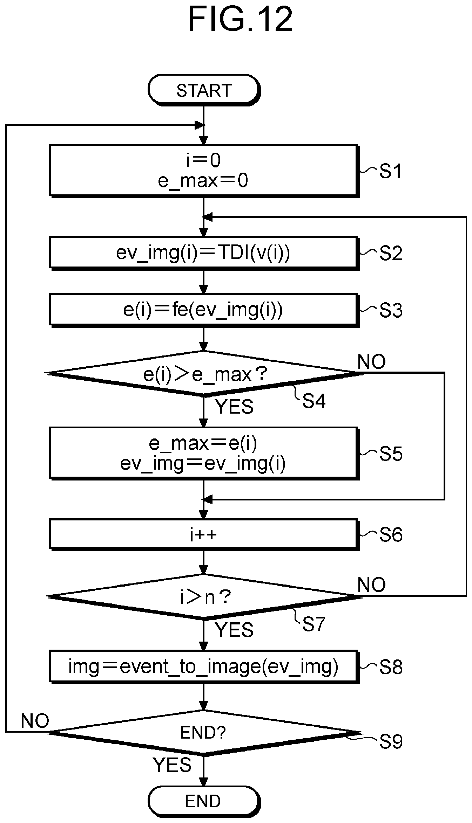

Next, an operation flow of the event data processing unit 123 described above will be described with an example. FIG. 12 is a flowchart illustrating the operation flow example of the event data processing unit according to the present embodiment.

As illustrated in FIG. 12, in the operation, first, a variable i is initialized (i = 1) in the TDI circuit 11 and the evaluation unit 12, and an evaluation value e_max in the registry is initialized (e_max = 0), for example, in the selection unit 13 (Step S1).

Next, the TDI circuit 11 executes TDI processing TDI(v(i)) using the i-th shift amount candidate value v(i) on the event stream input from the EVS device 122 within a frame period, thereby generating event image data ev_img(i) (Step S2). The generated event image data ev_img(i) is input to the evaluation unit 12 and the selection unit 13. It is assumed that n+1 (n is an integer of 1 or more) shift amount candidate values v(i) exist, and numbers (corresponding to i) of 0 to n are assigned to the shift amount candidate values v(i).

Next, the evaluation unit 12 analyzes the input event image data ev_img(i) to specify a necessary parameter among n_p, n_n, n_pn, n_p_e(i), and n_n_e(i), and substitutes the specified parameter into an evaluation function fe(ev_img(i)) to calculate the evaluation value e(i) (Step S3). The calculated evaluation value e(i) is input to the selection unit 13.

Next, the selection unit 13 determines whether or not the evaluation value e(i) input in Step S3 is higher than the evaluation value e_max held in the registry or the like (Step S4). In a case where the evaluation value e(i) is equal to or smaller than the evaluation value e_max (NO in Step S4), the operation proceeds to Step S6.

On the other hand, in a case where the evaluation value e(i) is higher than the evaluation value e_max (YES in Step S4), the selection unit 13 updates the evaluation value e_max managed by the registry or the like with the new evaluation value e(i) (e_max = e(i)), and updates the event image data ev_img stored in the buffer 14 with the new event image data ev_img(i) (ev_img = ev_img(i)) (Step S5), and the operation proceeds to Step S6.

In Step S6, the variable i is incremented by 1 (i++) in the TDI circuit 11 and the evaluation unit 12.

Next, a control unit that controls the TDI circuit 11, the evaluation unit 12, the selection unit 13, or the event data processing unit 123 determines whether or not the incremented variable i is larger than the number n of shift amount candidate values v(i) (that is, whether or not processing for all the shift amount candidate values v(i) has been completed) (Step S7). In a case where i is equal to or smaller than n (NO in Step S7), the operation returns to Step S2, and the subsequent operations are repeatedly performed.

On the other hand, in a case where i is larger than n (YES in Step S7), the event image data ev_img in the buffer 14 is read by the selection unit 13 and input to the reconstruction unit 15. The reconstruction unit 15 generates frame data img by executing processing of reconstructing the input event image data ev_img (event_to_image (ev_img)) (Step S8). The generated frame data img is input to the information processing unit 103.

In Step S8, the selection unit 13 may input the value of the variable i when the evaluation value e_max (= ev_img(i)) finally remaining in the registry or the like is calculated to the TDI circuit 11 and the evaluation unit 12. On the other hand, the TDI circuit 11 and the evaluation unit 12 may execute processing such as changing an initial value (which may be a reference value) of the shift amount candidate value v(i) to be used for the next frame or narrowing the shift amount candidate value v(i) based on the variable i input from the selection unit 13. As the initial value or reference value of the shift amount candidate value v(i), a shift amount based on the speed of the bioparticle P measured by the speed measurement unit 124 (see FIG. 2) may be used.

Thereafter, for example, the control unit that controls the event data processing unit 123 determines whether or not to end the operation (Step S9), and in a case where the control unit determines to end the operation (YES in Step S9), the operation ends. On the other hand, in a case where the control unit determines not to end the operation (NO in Step S9), the operation returns to Step S1, and the subsequent operations are performed.

3.9 Specific Example of Evaluation Value Calculation

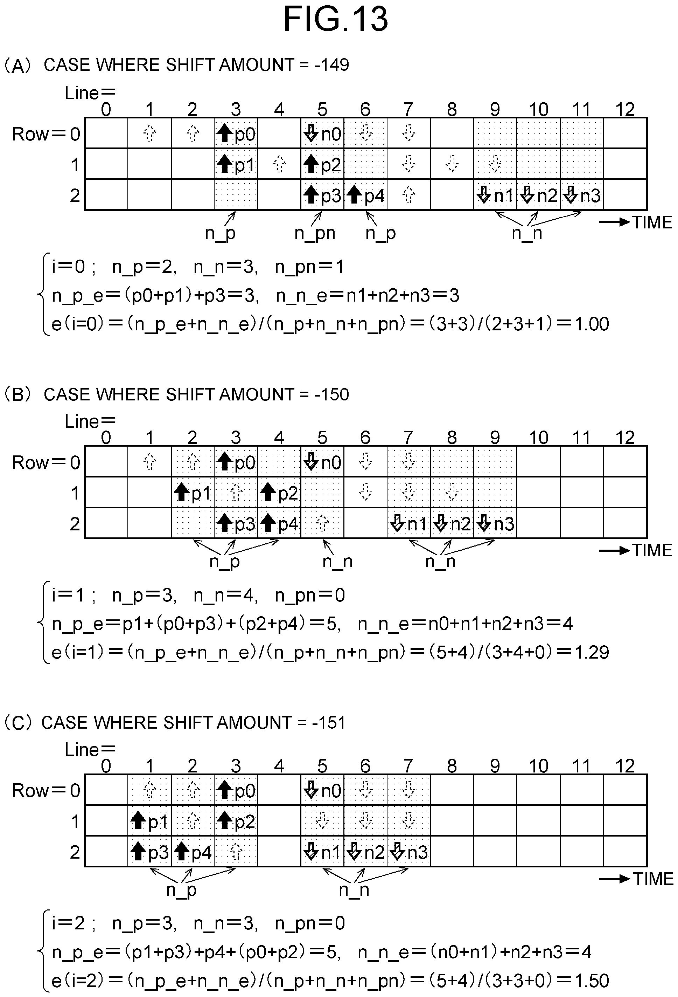

Next, a specific calculation example of the evaluation value will be described below. FIG. 13 is a diagram for describing a specific example of the evaluation value calculation according to the present embodiment, in which (A) illustrates a case where the shift amount is "-149", (B) illustrates a case where the shift amount is "-150", and (C) illustrates a case where the shift amount is "-151". In the following, for simplification of description, a case where the shift amount candidate value (= the interval of the event pixels 20/the speed of the bioparticle P) is set in increments of 1 in the range of -180 to -120, three shift amount candidate values (for example, three shift amount candidate values of -149 to - 151) are used, and Equation (1) above is used as the evaluation function will be exemplified.

First, as illustrated in (A) of FIG. 13, in a case where the shift amount is "-149" (a shift amount candidate value v(0) = -149), the number n_p of pixels to which only the positive event is assigned is 2, the number n_n of pixels to which only the negative event is assigned is 3, and the number n_pn of pixels to which both the positive event and the negative event are assigned is 1. In addition, the total number n_p_e of positive events in the pixels to which only the positive events are assigned is 3, and the total number n_n_e of positive events in the pixels to which only the negative events are assigned is 3. Therefore, the evaluation value e(i = 0) obtained by Equation (1) is 1.00.

Furthermore, as illustrated in (B), in a case where the shift amount is "-150" (a shift amount candidate value v(1) = -150), the number n_p of pixels to which only the positive event is assigned is 3, the number n_n of pixels to which only the negative event is assigned is 4, and the number n_pn of pixels to which both the positive event and the negative event are assigned is 0. In addition, the total number n_p_e of positive events in the pixels to which only the positive events are assigned is 5, and the total number n_n_e of positive events in the pixels to which only the negative events are assigned is 4. Therefore, the evaluation value e (i = 1) obtained by Equation (1) is 1.29.

Furthermore, as illustrated in (C), in a case where the shift amount is "-151" (a shift amount candidate value v(2) = -151), the number n_p of pixels to which only the positive event is assigned is 3, the number n_n of pixels to which only the negative event is assigned is 3, and the number n_pn of pixels to which both the positive event and the negative event are assigned is 0. In addition, the total number n_p_e of positive events in the pixels to which only the positive events are assigned is 5, and the total number n_n_e of positive events in the pixels to which only the negative events are assigned is 4. Therefore, the evaluation value e(i = 2) obtained by Equation (1) is 1.50.

Therefore, in this example, the evaluation value e(i = 2) in a case where the shift amount is "-151" is the highest value, and the event image data ev_img (i = 2) generated in a case where the shift amount is "-151" is output from the selection unit 13.

3.10 Operation Flow Example

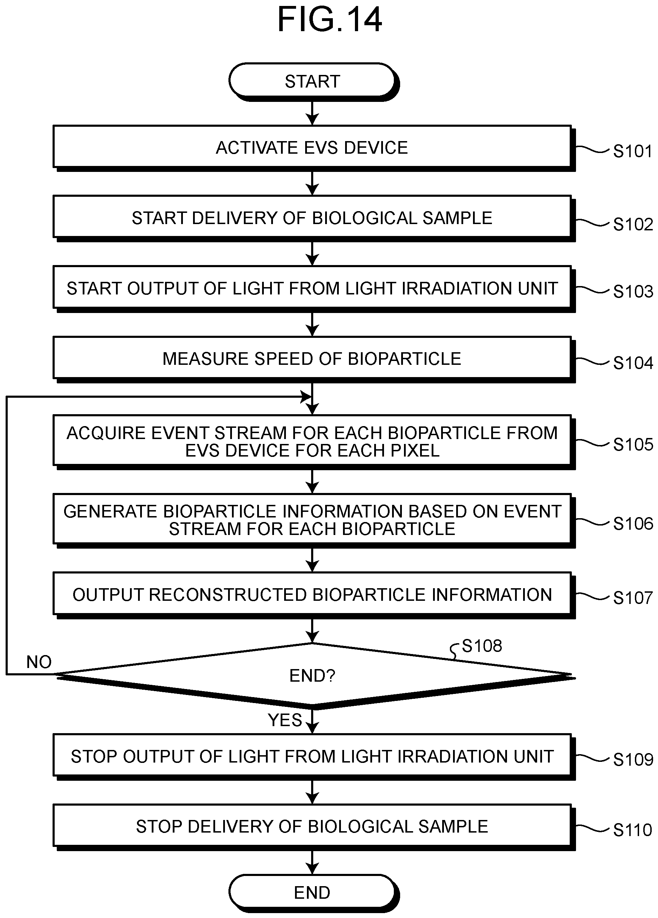

Next, an example of an operation performed by the biological sample analysis device 100 according to the present embodiment will be described. FIG. 14 is a flowchart illustrating an operation example according to the present embodiment. Execution of the operation described below may be controlled by the control unit (not illustrated) or the like that controls the biological sample analysis device 100.

As illustrated in FIG. 14, in the operation, first, the EVS device 122 is activated (Step S101), the delivery of the biological sample S to the flow channel C is started (Step S102), and the output of the light from the light irradiation unit 101 is started (Step S103). The order in which Steps S101 to S103 are performed may be changed.

As described above, when the delivery of the biological sample S to the flow channel C is started, in the operation, the speed measurement unit 124 measures the speed of the bioparticle P flowing in the flow channel C (Step S104). The measured speed of the bioparticle P is input to the event data processing unit 123.

A specific spot on the flow channel C is irradiated with the light from the light irradiation unit 101. Therefore, when the bioparticle P contained in the biological sample S delivered to the flow channel C passes through the spot, fluorescence or scattered light is emitted from the spot, and transmitted light and reflected light are emitted. The rays of light emitted from the spot are incident on the light receiving surface of the EVS device 122 via the detection optical system 121. Therefore, each event pixel 20 in the EVS device 122 detects the luminance change caused by an image of the light emitted when the bioparticle P passes through the spot as the positive event and the negative event. The event data detected for each event pixel 20 is output from the EVS device 122 to the event data processing unit 123 at any time, that is, in an asynchronous manner.

Since the event data including the polarity and the time stamp of the event that has occurred only in the event pixel 20 where the event has occurred is output as the stream (event stream) from the EVS device 122 to the event data processing unit 123, a data transfer amount can be significantly reduced as compared with the TDI-CCD method, the TDI-CMOS method, or the like in which the light reception amounts of all the pixels are output. As a result, even when a data transfer band connecting the EVS device 122 and the event data processing unit 123 is the same bandwidth, imaging at a higher speed of the bioparticle P becomes possible.

The event data processing unit 123 generates the event stream for each bioparticle P based on the event data for each event pixel 20 output from the EVS device 122 (Step S105). The event stream of each bioparticle P may be a set of event streams for each event pixel 20.

Then, the event data processing unit 123 generates the bioparticle information (the frame data in this example) of the bioparticle P that has passed through the spot on the flow channel C based on the generated event stream for each bioparticle P (Step S106), and outputs the reconstructed bioparticle information to the information processing unit 103 (Step S107).

Thereafter, it is determined whether or not to end the operation (Step S108), and in a case where it is determined not to end the operation (NO in Step S108), the operation returns to Step S104, and the subsequent operations are performed. On the other hand, in a case where it is determined to end the operation (YES in Step S108), the output of the light from the light irradiation unit 101 is stopped (Step S109), the delivery of the biological sample S to the flow channel C is stopped (Step S110), and the operation ends.

3.11 Example of Flow of Event Stream Acquisition Operation

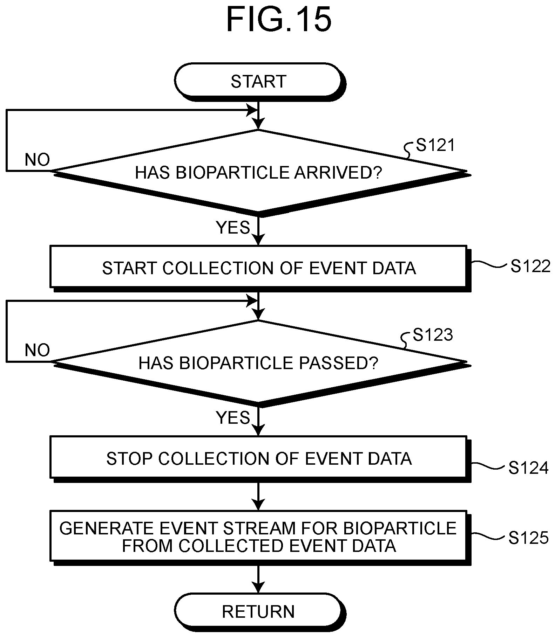

Next, the operation of acquiring the event stream described in Step S105 of FIG. 14 will be described in more detail with reference to FIG. 15. FIG. 15 is a flowchart illustrating a more detailed operation example of the event stream acquisition operation illustrated in Step S105 of FIG. 14.

As illustrated in FIG. 15, in the event stream acquisition operation illustrated in Step S105 of FIG. 14, first, the event data processing unit 123 monitors a column of the event data (event stream) input from the EVS device 122 to determine whether or not the bioparticle P has arrived at the spot on the flow channel C (Step S121). The event stream may be constantly monitored by the event data processing unit 123 after the operation illustrated in FIG. 14 is started.

When the bioparticle P arrives at the spot on the flow channel C (YES in Step S121), the event data processing unit 123 starts collecting the event data after the arrival of the bioparticle P including the event data indicating the arrival of the bioparticle P (Step S122). All the pieces of event data input from the EVS device 122 may be accumulated in a predetermined memory area separately from the collection of the event data in Step S123.

Thereafter, the event data processing unit 123 monitors the column (event stream) of the event data input from the EVS device 122 to determine whether or not the bioparticle P has passed through the spot on the flow channel C (Step S123). Then, when the bioparticle P has finished passing through the spot on the flow channel C (YES in Step S123), the event data processing unit 123 stops the collection of the event data (Step S124), and generates the event stream for each bioparticle P having passed through the spot on the flow channel C from the collected event data for each event pixel 20 (Step S125). Thereafter, the operation returns to the operation illustrated in FIG. 14.

3.12 Conclusion

As described above, according to the present embodiment, the event image data generated using each of the plurality of shift amount candidate values is evaluated, and thus, the event image data subjected to the TDI processing using the most suitable shift amount can be selected based on the actual measurement value. Then, since the frame data is reconstructed using the event image data having the highest evaluation value, it is possible to effectively suppress deterioration in image quality of the reconstructed frame data.

## 4. Second Embodiment

Next, a biological sample analysis system, an information processing device, an information processing method, and a biological sample analysis method according to a second embodiment of the present disclosure will be described. In the following description, the same configuration as that of the above-described embodiment is cited, and an overlapping description is omitted.

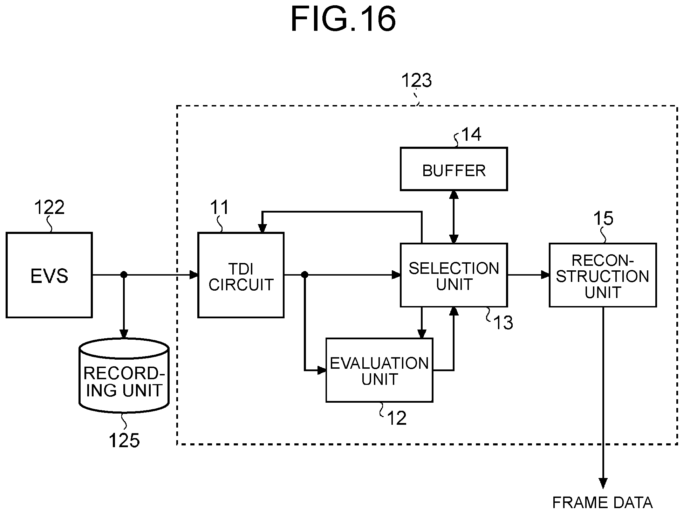

FIG. 16 is a block diagram illustrating a schematic configuration example of a part of a detection unit according to the present embodiment. FIG. 16 illustrates a schematic configuration example including an EVS device 122 and an event data processing unit 123, and illustrates a configuration corresponding to the configuration described with reference to FIG. 10 in the first embodiment.

As illustrated in FIG. 16, in the present embodiment, a recording unit 125 is added to an output of the EVS device 122, and an event stream output from the EVS device 122 is accumulated in the recording unit 125.

In this manner, the event streams output from the EVS device 122 are accumulated, and it is possible to generate frame data from the accumulated event streams, and thus, it is possible to generate the frame data without being limited to a real-time requirement. As a result, it is possible to increase a variation of a shift amount candidate value, and thus, it is possible to generate the frame data with higher image quality.

Other configurations, operations, and effects may be similar to those of the above-described embodiment, and thus a detailed description thereof is omitted here.

## 5. Third Embodiment

Next, a biological sample analysis system, an information processing device, an information processing method, and a biological sample analysis method according to a third embodiment of the present disclosure will be described. In the following description, the same configuration as that of the above-described embodiment is cited, and an overlapping description is omitted.

In the embodiment described above, the shift amount candidate value when the event image data having the highest evaluation value among the plurality of shift amount candidate values is generated is specified as the optimum shift amount, but a method of specifying the optimum shift amount is not limited thereto, and may be variously changed.

For example, the optimum shift amount may be specified using an approximate curve obtained by fitting, for example, a Gaussian function or the like to an evaluation value of event image data generated using three or more shift amount candidate values. Then, the event image data may be generated from an event stream using the optimum shift amount specified by the approximate curve.

In this way, by specifying the optimum shift amount from the approximate curve obtained by fitting, it is possible to specify a more accurate shift amount, and thus, it is possible to further suppress deterioration in image quality of frame data to be reconstructed. In addition, since the number of times TDI processing is executed by a TDI circuit 11 (that is, the number of times the event image data is generated) can be reduced, a processing time can be shortened and power consumption can be reduced.

Furthermore, in processing for the next and subsequent frames, a range of the shift amount candidate value to be searched can be narrowed down to the vicinity of the optimum shift amount specified from the approximate curve, so that the processing time can be further shortened and the power consumption can be further reduced.

Other configurations, operations, and effects may be similar to those of the above-described embodiment, and thus a detailed description thereof is omitted here.

## 6. Hardware Configuration

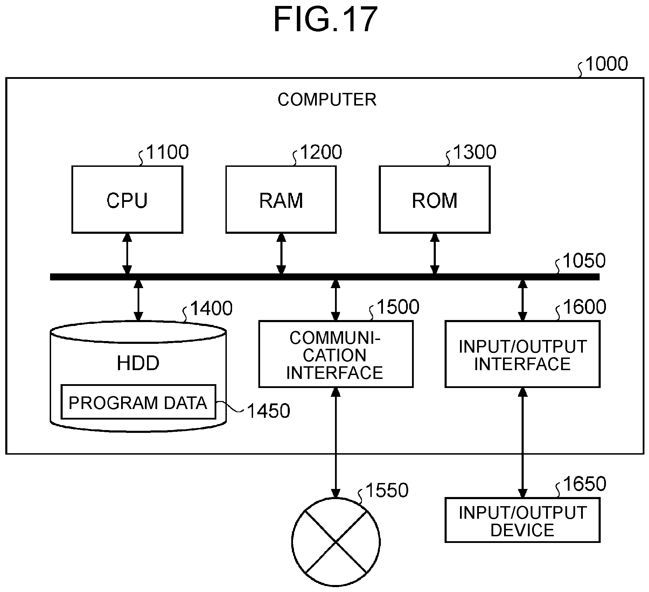

The event data processing unit 123 and/or the information processing unit 103 according to the embodiments, the modifications, and the application examples described above can be implemented by a computer 1000 having a configuration as illustrated in FIG. 17, for example. FIG. 17 is a hardware configuration diagram illustrating an example of the computer 1000 that implements the functions of the event data processing unit 123 and/or the information processing unit 103. The computer 1000 includes a CPU 1100, a RAM 1200, a ROM 1300, a hard disk drive (HDD) 1400, a communication interface 1500, and an input/output interface 1600. Each component of the computer 1000 is connected by a bus 1050.

The CPU 1100 is operated based on a program stored in the ROM 1300 or the HDD 1400, and controls each component. For example, the CPU 1100 loads the program stored in the ROM 1300 or the HDD 1400 on the RAM 1200 and performs processing corresponding to various programs.

The ROM 1300 stores a boot program such as a basic input output system (BIOS) executed by the CPU 1100 when the computer 1000 is started, a program that depends on the hardware of the computer 1000, or the like.

The HDD 1400 is a recording medium that is readable by the computer, in which a program executed by the CPU 1100, data used by the program, or the like, is non-temporarily recorded. Specifically, the HDD 1400 is a recording medium in which a program for implementing each operation according to the present disclosure, which is an example of program data 1450, is recorded.

The communication interface 1500 is an interface for the computer 1000 to be connected to an external network 1550 (for example, the Internet). For example, the CPU 1100 receives data from another equipment or transmits data generated by the CPU 1100 to another equipment via the communication interface 1500.

The input/output interface 1600 has a configuration including the I/F unit 18 described above, and is an interface for connecting an input/output device 1650 and the computer 1000. For example, the CPU 1100 receives data from an input device such as a keyboard or mouse via the input/output interface 1600. Further, the CPU 1100 transmits data to an output device such as a display, a speaker, or a printer via the input/output interface 1600. Further, the input/output interface 1600 may function as a medium interface for reading a program or the like recorded in a predetermined recording medium. Examples of the medium include an optical recording medium such as a digital versatile disc (DVD) or a phase change rewritable disk (PD), a magneto-optical recording medium such as a magneto-optical disk (MO), a tape medium, a magnetic recording medium, and a semiconductor memory.

For example, in a case where the computer 1000 functions as the event data processing unit 123 and/or the information processing unit 103 according to the embodiments described above, the CPU 1100 of the computer 1000 implements the functions of the event data processing unit 123 and/or the information processing unit 103 by executing a program loaded on the RAM 1200. In addition, the HDD 1400 stores the program and the like according to the present disclosure. The CPU 1100 reads the program data 1450 from the HDD 1400 and executes the program data 1450, but as another example, these programs may be acquired from another device via the external network 1550.

Although the embodiments of the present disclosure have been described above, the technical scope of the present disclosure is not limited to the above-described embodiments, and various modifications can be made without departing from the scope of the present disclosure. Moreover, components of different embodiments and modified examples may be appropriately combined.

Further, the effects in each embodiment described in the present specification are merely examples. The effects of the present disclosure are not limited thereto, and other effects may be obtained.

Note that the present technology can also have the following configurations.

(1) A biological sample analysis system comprising:

an irradiation unit that irradiates a bioparticle in a biological sample with light;
a detection unit that detects, as an event, a luminance change of light emitted from the bioparticle by the irradiation with the light, includes a plurality of event pixels arranged in a two-dimensional lattice pattern, and outputs event data including address information of each of the event pixels and information of a time when the event is detected in each of the event pixels;
a generation unit that corrects the information of the time of some of a plurality of pieces of the event data by using each of a plurality of correction amounts, and generates image data regarding the bioparticle for each correction amount by using the plurality of pieces of event data including the event data in which the information of the time is corrected;
an evaluation unit that evaluates each of a plurality of pieces of the image data; and
a processing unit that generates bioparticle information regarding the bioparticle based on image data with a highest evaluation by the evaluation unit among the plurality of pieces of image data.

(2) The biological sample analysis system according to (1), wherein

the bioparticle moves in a first direction with respect to the detection unit,
the plurality of event pixels include two or more event pixels arranged adjacent to or separated from each other in a second direction corresponding to the first direction, and
the generation unit generates the image data for each correction amount by correcting the information of the time of first event data based on an event detected in a first event pixel positioned downstream in the second direction among the two or more event pixels arranged in the second direction by using each of the plurality of correction amounts, and superimposing second event data based on an event detected in a second event pixel positioned upstream in the second direction, and each piece of the first event data corrected using each of the correction amounts.

(3) The biological sample analysis system according to (2), wherein

the first event data and the second event data each include a polarity of the corresponding event, and
the generation unit generates the image data by superimposing the polarity of the first event data and the polarity of the second event data.

(4) The biological sample analysis system according to any one of (1) to (3), wherein the evaluation unit evaluates the image data based on at least one of the number of pixels to which the event data is assigned among the pixels included in the image data or the number of pieces of the event data included in the image data.

(5) The biological sample analysis system according to (4), wherein

the event data includes a polarity of the corresponding event, and
the evaluation unit counts at least one of the number of pixels to which the event data is assigned or the number of pieces of event data included in the image data for each polarity included in the event data, and evaluates the image data based on at least one of the counted number of pixels or the counted number of pieces of event data for each polarity.

(6) The biological sample analysis system according to any one of (1) to (5), wherein the evaluation unit evaluates the image data based on Equation (19):

$$e(i) = \frac{\sum_i^{n\_p} w(n\_p\_e(i)) \times n\_p\_e(i) + \sum_i^{n\_n} w(n\_n\_e(i)) \times n\_n\_e(i)}{n\_p + n\_n + n\_pn}$$

$$\cdots (19)$$

in which an evaluation value of the image data is e(i) (i is a natural number), n_p represents the number of pixels to which only a positive event is assigned in the image data, n_n represents the number of pixels to which only a negative event is assigned, n_pn represents the number of pixels to which both the positive event and the negative event are assigned, n_p_e(i) represents the number of positive events of an i-th pixel among pixels in which only the positive event is detected, n_n_e(i) represents the number of negative events of an i-th pixel among pixels in which only the negative event is detected, and w() represents a weighting coefficient.

(7) The biological sample analysis system according to any one of (1) to (6), wherein the plurality of correction amounts are values determined based on a speed of the bioparticle and an interval of the event pixels in a movement direction of the bioparticle.

(8) The biological sample analysis system according to any one of (1) to (7), wherein the generation unit generates the plurality of pieces of image data based on the event data output from the detection unit during a predetermined frame period.

(9) The biological sample analysis system according to (8), wherein the generation unit narrows down a correction amount to be used for generation of a plurality of pieces of image data based on event data output from the detection unit during a next frame period from the plurality of correction amounts based on a correction amount used when image data with a highest evaluation by the evaluation unit among a plurality of pieces of image data generated based on event data output from the detection unit during a previous frame period is generated.

(10) The biological sample analysis system according to (8) or (9), wherein the generation unit sets a correction amount used when image data with a highest evaluation by the evaluation unit among a plurality of pieces of image data generated based on event data output from the detection unit during a previous frame period as an initial value of a correction amount to be used for generation of a plurality of pieces of image data based on event data output from the detection unit during a next frame period.

(11) The biological sample analysis system according to any one of (1) to (10), wherein

the evaluation unit specifies an optimum correction amount based on an evaluation result for each of the plurality of pieces of image data,
the generation unit corrects the information of the time of some of the plurality of pieces of event data by using the optimum correction amount specified by the evaluation unit, and generates image data with the optimum correction amount by using the plurality of pieces of event data including the event data in which the information of the time is corrected, and
the processing unit generates the bioparticle information based on the image data with the optimum correction amount.

(12) The biological sample analysis system according to any one of (1) to (11), wherein the bioparticle information is image data.

(13) The biological sample analysis system according to any one of (1) to (12), wherein the bioparticle is a cell or a non-cellular bioparticle.

(14) The biological sample analysis system according to any one of (1) to (13), wherein

the irradiation unit irradiates a predetermined spot on a flow channel with the light, and
the bioparticle moves in the flow channel so as to pass through the predetermined spot.

(15) The biological sample analysis system according to any one of (1) to (14), further comprising a spectroscopic optical system that spectrally separates the light emitted from the bioparticle, wherein

the bioparticle is labeled with one or more fluorescent dyes,
the irradiation unit irradiates the bioparticle with the light including excitation light in one or more wavelength ranges, and
the detection unit detects, as the event, a luminance change of each ray of light spectrally separated by the spectroscopic optical system.

(16) The biological sample analysis system according to (15), wherein the detection unit includes a plurality of detection units arranged on a one-to-one basis for each ray of light spectrally separated by the spectroscopic optical system.

(17) An information processing device comprising:

a generation unit that corrects, by using each of a plurality of correction amounts, information of a time of some of a plurality of pieces of event data output from a detection unit that detects, as an event, a luminance change of light emitted from a bioparticle by irradiation of a bioparticle in a biological sample with light, includes a plurality of event pixels arranged in a two-dimensional lattice pattern, and outputs the event data including address information of each of the event pixels and the information of the time when the event is detected in each of the event pixels, and generates image data regarding the bioparticle for each correction amount by using the plurality of pieces of event data including the event data in which the information of the time is corrected;
an evaluation unit that evaluates each of a plurality of pieces of the image data; and
a processing unit that generates bioparticle information regarding the bioparticle based on image data with a highest evaluation by the evaluation unit among the plurality of pieces of image data.

(18) An information processing method comprising:

correcting, by using each of a plurality of correction amounts, information of a time of some of a plurality of pieces of event data output from a detection unit that detects, as an event, a luminance change of light emitted from a bioparticle by irradiation of a bioparticle in a biological sample with light, includes a plurality of event pixels arranged in a two-dimensional lattice pattern, and outputs the event data including address information of each of the event pixels and the information of the time when the event is detected in each of the event pixels;
generating image data regarding the bioparticle for each correction amount by using the plurality of pieces of event data including the event data in which the information of the time is corrected;
evaluating each of a plurality of pieces of the image data; and
generating bioparticle information regarding the bioparticle based on image data with a highest evaluation among the plurality of pieces of image data.

(19) A biological sample analysis method comprising:

irradiating, by an irradiation unit, a bioparticle in a biological sample with light;
outputting, by a detection unit that detects, as an event, a luminance change of light emitted from the bioparticle by the irradiation with the light and includes a plurality of event pixels arranged in a two-dimensional lattice pattern, event data including address information of each of the event pixels and information of a time when the event is detected in each of the event pixels;
correcting the information of the time of some of a plurality of pieces of the event data by using each of a plurality of correction amounts, and generating image data regarding the bioparticle for each correction amount by using the plurality of pieces of event data including the event data in which the information of the time is corrected;
evaluating each of a plurality of pieces of the image data; and

generating bioparticle information regarding the bioparticle based on image data with a highest evaluation among the plurality of pieces of image data.

Reference Signs List

11    TDI CIRCUIT

12    EVALUATION UNIT

13    SELECTION UNIT

14    BUFFER

15    RECONSTRUCTION UNIT

20    EVENT PIXEL

100   BIOLOGICAL SAMPLE ANALYSIS DEVICE

101   LIGHT IRRADIATION UNIT

102   DETECTION UNIT

103   INFORMATION PROCESSING UNIT

104   SORTING UNIT

111   LIGHT SOURCE UNIT

112   LIGHT GUIDE OPTICAL SYSTEM

121   DETECTION OPTICAL SYSTEM

122   EVS DEVICE

123   EVENT DATA PROCESSING UNIT

124   SPEED MEASUREMENT UNIT

125   RECORDING UNIT

201   PIXEL ARRAY UNIT

202   X ARBITER

203   Y ARBITER

204   EVENT SIGNAL PROCESSING CIRCUIT

205   SYSTEM CONTROL CIRCUIT

206   OUTPUT I/F

**Claims**

**1.** A biological sample analysis system comprising:

an irradiation unit that irradiates a bioparticle in a biological sample with light;

a detection unit that detects, as an event, a luminance change of light emitted from the bioparticle by the irradiation with the light, includes a plurality of event pixels arranged in a two-dimensional lattice pattern, and outputs event data including address information of each of the event pixels and information of a time when the event is detected in each of the event pixels;

a generation unit that corrects the information of the time of some of a plurality of pieces of the event data by using each of a plurality of correction amounts, and generates image data regarding the bioparticle for each correction amount by using the plurality of pieces of event data including the event data in which the information of the time is corrected;

an evaluation unit that evaluates each of a plurality of pieces of the image data; and

a processing unit that generates bioparticle information regarding the bioparticle based on image data with a highest evaluation by the evaluation unit among the plurality of pieces of image data.

2. The biological sample analysis system according to claim 1, wherein

the bioparticle moves in a first direction with respect to the detection unit,

the plurality of event pixels include two or more event pixels arranged adjacent to or separated from each other in a second direction corresponding to the first direction, and

the generation unit generates the image data for each correction amount by correcting the information of the time of first event data based on an event detected in a first event pixel positioned downstream in the second direction among the two or more event pixels arranged in the second direction by using each of the plurality of correction amounts, and superimposing second event data based on an event detected in a second event pixel positioned upstream in the second direction, and each piece of the first event data corrected using each of the correction amounts.

3. The biological sample analysis system according to claim 2, wherein

the first event data and the second event data each include a polarity of the corresponding event, and

the generation unit generates the image data by superimposing the polarity of the first event data and the polarity of the second event data.

4. The biological sample analysis system according to claim 1, wherein the evaluation unit evaluates the image data based on at least one of the number of pixels to which the event data is assigned among the pixels included in the image data or the number of pieces of the event data included in the image data.

5. The biological sample analysis system according to claim 4, wherein

the event data includes a polarity of the corresponding event, and

the evaluation unit counts at least one of the number of pixels to which the event data is assigned or the number of pieces of event data included in the image data for each polarity included in the event data, and evaluates the image data based on at least one of the counted number of pixels or the counted number of pieces of event data for each polarity.

6. The biological sample analysis system according to claim 1, wherein the evaluation unit evaluates the image data based on Equation (1):

$$e(i) = \frac{\sum_i^{n\_p} w(n\_p\_e(i)) \times n\_p\_e(i) + \sum_i^{n\_n} w(n\_n\_e(i)) \times n\_n\_e(i)}{n\_p + n\_n + n\_pn}$$

$$\cdots (1)$$

in which an evaluation value of the image data is e(i) (i is a natural number), n_p represents the number of pixels to which only a positive event is assigned in the image data, n_n represents the number of pixels to which only a negative event is assigned, n_pn represents the number of pixels to which both the positive event and the negative event are assigned, n_p_e(i) represents the number of positive events of an i-th pixel among pixels in which only the positive event is detected, n_n_e(i) represents the number of negative events of an i-th pixel among pixels in which only the negative event is detected, and w() represents a weighting coefficient.

7. The biological sample analysis system according to claim 1, wherein the plurality of correction amounts are values determined based on a speed of the bioparticle and an interval of the event pixels in a movement direction of the bioparticle.

8. The biological sample analysis system according to claim 1, wherein the generation unit generates the plurality of pieces of image data based on the event data output from the detection unit during a predetermined frame period.

9. The biological sample analysis system according to claim 8, wherein the generation unit narrows down a correction amount to be used for generation of a plurality of pieces of image data based on event data output from the detection unit during a next frame period from the plurality of correction amounts based on a correction amount used when image data with a highest evaluation by the evaluation unit among a plurality of pieces of image data generated based on event data output from the detection unit during a previous frame period is generated.

10. The biological sample analysis system according to claim 8, wherein the generation unit sets a correction amount used when image data with a highest evaluation by the evaluation unit among a plurality of pieces of image data generated based on event data output from the detection unit during a previous frame period as an initial value of a correction amount to be used for generation of a plurality of pieces of image data based on event data output from the detection unit during a next frame period.

11. The biological sample analysis system according to claim 1, wherein

the evaluation unit specifies an optimum correction amount based on an evaluation result for each of the plurality of pieces of image data,
the generation unit corrects the information of the time of some of the plurality of pieces of event data by using the optimum correction amount specified by the evaluation unit, and generates image data with the optimum correction amount by using the plurality of pieces of event data including the event data in which the information of the time is corrected, and
the processing unit generates the bioparticle information based on the image data with the optimum correction amount.

12. The biological sample analysis system according to claim 1, wherein the bioparticle information is image data.

13. The biological sample analysis system according to claim 1, wherein the bioparticle is a cell or a non-cellular bioparticle.

14. The biological sample analysis system according to claim 1, wherein

the irradiation unit irradiates a predetermined spot on a flow channel with the light, and
the bioparticle moves in the flow channel so as to pass through the predetermined spot.

15. The biological sample analysis system according to claim 1, further comprising a spectroscopic optical system that spectrally separates the light emitted from the bioparticle, wherein

the bioparticle is labeled with one or more fluorescent dyes,
the irradiation unit irradiates the bioparticle with the light including excitation light in one or more wavelength ranges, and
the detection unit detects, as the event, a luminance change of each ray of light spectrally separated by the spectroscopic optical system.

16. The biological sample analysis system according to claim 15, wherein the detection unit includes a plurality of detection units arranged on a one-to-one basis for each ray of light spectrally separated by the spectroscopic optical system.

17. An information processing device comprising:

a generation unit that corrects, by using each of a plurality of correction amounts, information of a time of some of a plurality of pieces of event data output from a detection unit that detects, as an event, a luminance change of light emitted from a bioparticle by irradiation of a bioparticle in a biological sample with light, includes a plurality of event pixels arranged in a two-dimensional lattice pattern, and outputs the event data including address information of each of the event pixels and the information of the time when the event is detected in each of the event pixels, and generates image data regarding the bioparticle for each correction amount by using the plurality of pieces of event data including the event data in which the information of the time is corrected;

an evaluation unit that evaluates each of a plurality of pieces of the image data; and

a processing unit that generates bioparticle information regarding the bioparticle based on image data with a highest evaluation by the evaluation unit among the plurality of pieces of image data.

18. An information processing method comprising:

correcting, by using each of a plurality of correction amounts, information of a time of some of a plurality of pieces of event data output from a detection unit that detects, as an event, a luminance change of light emitted from a bioparticle by irradiation of a bioparticle in a biological sample with light, includes a plurality of event pixels arranged in a two-dimensional lattice pattern, and outputs the event data including address information of each of the event pixels and the information of the time when the event is detected in each of the event pixels;

generating image data regarding the bioparticle for each correction amount by using the plurality of pieces of event data including the event data in which the information of the time is corrected;

evaluating each of a plurality of pieces of the image data; and

generating bioparticle information regarding the bioparticle based on image data with a highest evaluation among the plurality of pieces of image data.

19. A biological sample analysis method comprising:

irradiating, by an irradiation unit, a bioparticle in a biological sample with light;

outputting, by a detection unit that detects, as an event, a luminance change of light emitted from the bioparticle by the irradiation with the light and includes a plurality of event pixels arranged in a two-dimensional lattice pattern, event data including address information of each of the event pixels and information of a time when the event is detected in each of the event pixels;

correcting the information of the time of some of a plurality of pieces of the event data by using each of a plurality of correction amounts, and generating image data regarding the bioparticle for each correction amount by using the plurality of pieces of event data including the event data in which the information of the time is corrected;

evaluating each of a plurality of pieces of the image data; and

generating bioparticle information regarding the bioparticle based on image data with a highest evaluation among the plurality of pieces of image data.

# FIG.1

S

P

C

100

101

LIGHT
IRRADIATION
UNIT

102

DETECTION
UNIT

103

INFORMATION
PROCESSING
UNIT

SORTING
UNIT

104

FIG.2

# FIG.3

# FIG.4

(a)

MOVEMENT DIRECTION

R1
R3
P_img
R2
A1
A3
A2
20

(b)

LUMINANCE

THRESHOLD

A1
A2

(c)

A1
POSITIVE EVENT
A2
NEGATIVE EVENT

# FIG.5

COLUMN DIRECTION

20_0  20_1  20_N

PIXEL
COLUMN

FALSE EVENT                FALSE EVENT

$t=t_N$

}POSITIVE EVENT } EVENT COLUMN
}NEGATIVE EVENT { FROM PIXEL 20_N

FALSE EVENT   EVENT LOSS   FALSE EVENT

$t=t_1$

}POSITIVE EVENT } EVENT COLUMN
}NEGATIVE EVENT { FROM PIXEL 20_1

$t=t_0$

}POSITIVE EVENT } EVENT COLUMN
}NEGATIVE EVENT { FROM PIXEL 20_0

FALSE EVENT        FALSE EVENT

EP 4 528 250 A1

# FIG.6

FALSE EVENT          FALSE EVENT

$t=t_N$          } EVENT COLUMN
                   FROM PIXEL 20_N

FALSE EVENT     EVENT LOSS     FALSE EVENT

$t=t_1$          } EVENT COLUMN
                   FROM PIXEL 20_1

$t=t_0$          } EVENT COLUMN
                   FROM PIXEL 20_0

FALSE EVENT          FALSE EVENT

# FIG.7

t          } ACCUMULATED
             EVENT COLUMNS

# FIG.8

# FIG.9

# FIG.10

# FIG.11

# FIG.12

START

i=0
e_max=0 — S1

ev_img(i)=TDI(v(i)) — S2

e(i)=fe(ev_img(i)) — S3

e(i)>e_max? — S4
NO
YES

e_max=e(i)
ev_img=ev_img(i) — S5

i++ — S6

i>n? — S7
NO
YES

img=event_to_image(ev_img) — S8

END? — S9
NO
YES

END

# FIG.13

(A) CASE WHERE SHIFT AMOUNT = -149

$$i=0 ; \quad n\_p=2, \quad n\_n=3, \quad n\_pn=1$$
$$n\_p\_e=(p0+p1)+p3=3, \quad n\_n\_e=n1+n2+n3=3$$
$$e(i=0)=(n\_p\_e+n\_n\_e)/(n\_p+n\_n+n\_pn)=(3+3)/(2+3+1)=1.00$$

(B) CASE WHERE SHIFT AMOUNT = -150

$$i=1 ; \quad n\_p=3, \quad n\_n=4, \quad n\_pn=0$$
$$n\_p\_e=p1+(p0+p3)+(p2+p4)=5, \quad n\_n\_e=n0+n1+n2+n3=4$$
$$e(i=1)=(n\_p\_e+n\_n\_e)/(n\_p+n\_n+n\_pn)=(5+4)/(3+4+0)=1.29$$

(C) CASE WHERE SHIFT AMOUNT = -151

$$i=2 ; \quad n\_p=3, \quad n\_n=3, \quad n\_pn=0$$
$$n\_p\_e=(p1+p3)+p4+(p0+p2)=5, \quad n\_n\_e=(n0+n1)+n2+n3=4$$
$$e(i=2)=(n\_p\_e+n\_n\_e)/(n\_p+n\_n+n\_pn)=(5+4)/(3+3+0)=1.50$$

# FIG.14

START

ACTIVATE EVS DEVICE — S101

START DELIVERY OF BIOLOGICAL SAMPLE — S102

START OUTPUT OF LIGHT FROM LIGHT IRRADIATION UNIT — S103

MEASURE SPEED OF BIOPARTICLE — S104

ACQUIRE EVENT STREAM FOR EACH BIOPARTICLE FROM EVS DEVICE FOR EACH PIXEL — S105

GENERATE BIOPARTICLE INFORMATION BASED ON EVENT STREAM FOR EACH BIOPARTICLE — S106

OUTPUT RECONSTRUCTED BIOPARTICLE INFORMATION — S107

S108

END?

NO

YES

STOP OUTPUT OF LIGHT FROM LIGHT IRRADIATION UNIT — S109

STOP DELIVERY OF BIOLOGICAL SAMPLE — S110

END

# FIG.15

START

S121
NO    HAS BIOPARTICLE ARRIVED?

YES

START COLLECTION OF EVENT DATA    S122

S123
NO    HAS BIOPARTICLE PASSED?

YES

STOP COLLECTION OF EVENT DATA    S124

GENERATE EVENT STREAM FOR BIOPARTICLE FROM COLLECTED EVENT DATA    S125

RETURN

# FIG.16

# FIG.17

```
                                                  ⌐1000
┌─────────────────────────────────────────────────────┐
│                     COMPUTER                          │
│                                                       │
│     ⌐1100          ⌐1200          ⌐1300               │
│  ┌──────────┐   ┌──────────┐   ┌──────────┐          │
│  │   CPU    │   │   RAM    │   │   ROM    │          │
│  └──────────┘   └──────────┘   └──────────┘          │
│        ↕              ↕              ↕         ⌐1050  │
│  ━━━━━━━━━━━━━━━━━━━━━━━━━━━━━━━━━━━━━━━━━━━━━━━━━━━   │
│        ↕      ⌐1400       ↕   ⌐1500    ↕   ⌐1600     │
│    ┌────────────┐   ┌──────────┐   ┌──────────┐       │
│    │    HDD     │   │ COMMUNI- │   │INPUT/OUTPUT│     │
│    │            │   │  CATION  │   │ INTERFACE │      │
│    │┌──────────┐│   │INTERFACE │   │           │      │
│    ││PROGRAM DATA││  └──────────┘   └──────────┘      │
│    │└──────────┘│        ↕              ↕             │
│    └────────────┘ ⌐1450                               │
└─────────────────────────────────────────────────────┘
                          ↕              ↕
                        ⊗ ⌐1550    ┌──────────┐ ⌐1650
                                   │INPUT/OUTPUT│
                                   │  DEVICE  │
                                   └──────────┘
```

# EP 4 528 250 A1

## INTERNATIONAL SEARCH REPORT

International application No.

**PCT/JP2023/017188**

### A. CLASSIFICATION OF SUBJECT MATTER

***G01N 15/14***(2006.01)i; ***G01N 21/64***(2006.01)i
FI:   G01N15/14 D; G01N15/14 C; G01N21/64 F

According to International Patent Classification (IPC) or to both national classification and IPC

### B. FIELDS SEARCHED

Minimum documentation searched (classification system followed by classification symbols)

G01N15/14; G01N21/64

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2021/215173 A1 (SONY GROUP CORP.) 28 October 2021 (2021-10-28) | 1-19 |
| A | US 2017/0033777 A1 (SAMSUNG ELECTRONICS CO., LTD.) 02 February 2017 (2017-02-02) | 1-19 |

☐ Further documents are listed in the continuation of Box C.     ☑ See patent family annex.

| | |
|---|---|
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **25 May 2023** | **06 June 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/017188**

| Patent document cited in search report | | | Publication date (day/month/year) | Patent family member(s) | | | Publication date (day/month/year) |
|---|---|---|---|---|---|---|---|
| WO | 2021/215173 | A1 | 28 October 2021 | CN | 115398202 | A | |
| | | | | KR | 10-2023-0002344 | A | |
| | | | | TW | 202210794 | A | |
| US | 2017/0033777 | A1 | 02 February 2017 | KR | 10-2017-0014823 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6211955 B
- JP 2011232259 A
- JP 2020076736 A